(19) Europäisches Patentamt
European Patent Office
Office européen des brevets

(11)  **EP 4 300 750 A1**

(12)  **EUROPEAN PATENT APPLICATION**
published in accordance with Art. 153(4) EPC

(43) Date of publication:
03.01.2024   Bulletin 2024/01

(21) Application number: 21929933.6

(22) Date of filing: 30.11.2021

(51) International Patent Classification (IPC):
*H02J 3/32* $^{(2006.01)}$         *H02J 7/00* $^{(2006.01)}$

(52) Cooperative Patent Classification (CPC):
**H02J 3/32; H02J 7/00**

(86) International application number:
**PCT/CN2021/134301**

(87) International publication number:
**WO 2022/188471 (15.09.2022 Gazette 2022/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:   12.03.2021   PCT/CN2021/080334

(71) Applicant: **Huawei Digital Power Technologies
Co., Ltd.
Shenzhen, Guangdong 518043 (CN)**

(72) Inventors:
• **WU, Zhipeng**
   **Shenzhen, Guangdong 518043 (CN)**
• **LI, Lin**
   **Shenzhen, Guangdong 518043 (CN)**
• **ZHOU, He**
   **Shenzhen, Guangdong 518043 (CN)**
• **ZHANG, Yanzhong**
   **Shenzhen, Guangdong 518043 (CN)**
• **KONG, Jie**
   **Shenzhen, Guangdong 518043 (CN)**

(74) Representative: **Gill Jennings & Every LLP
The Broadgate Tower
20 Primrose Street
London EC2A 2ES (GB)**

(54)  **ENERGY STORAGE SYSTEM AND CONTROL METHOD THEREFOR, AND PHOTOVOLTAIC
POWER GENERATION SYSTEM**

(57)   This application relates to the field of power supply technologies, and discloses an energy storage system, a control method for an energy storage system, and a photovoltaic power generation system. The energy storage system includes a battery cluster, a direct current converter, a controller, and at least one power conversion system. The energy storage system includes at least one direct current branch. The direct current branch includes a battery cluster and a direct current converter that are connected to each other. The direct current converter performs direct current conversion on a direct current provided by the battery cluster. Each battery cluster includes at least two energy storage modules that are connected in series. Each energy storage module includes a battery module. All or some of the energy storage modules include a first equalization circuit. Each battery module includes at least two batteries. The controller controls the first equalization circuit, to balance electricity quantities of battery modules in the battery cluster, and allocates operating power to the power conversion system and the direct current converter. In this solution, impact of bucket effect on the energy storage system is reduced, so that a battery capacity can be more fully utilized.

EP 4 300 750 A1

FIG. 4

## Description

This application claims priority to International Patent Application No. PCT/CN2021/080334, filed with the China National Intellectual Property Administration on March 12, 2021 and entitled "ENERGY STORAGE SYSTEM, CONTROL METHOD FOR ENERGY STORAGE SYSTEM, AND PHOTOVOLTAIC POWER GENERATION SYSTEM", which is incorporated herein by reference in its entirety.

## TECHNICAL FIELD

This application relates to the field of power supply technologies, and in particular, to an energy storage system, a control method for an energy storage system, and a photovoltaic power generation system.

## BACKGROUND

With aggravation of energy shortage and environmental pollution in modern society, currently, new energy power generation modes such as photovoltaic power generation and wind power generation are widely used. However, fluctuation and intermittency characteristics of these types of new energy are also increasingly significant, causing increasingly serious impact to operation safety and stability of a power grid system. With development of electrochemical cell technologies and a sharp increase of a production capacity, costs of electrochemical cells decrease. This brings an opportunity for electrochemical cells to participate in energy storage of new energy power generation systems. In addition, energy storage systems using electrochemical cells are characterized by flexibility, charge/discharge controllability, a quick response capability, high energy density, and the like. Therefore, the energy storage systems using electrochemical cells are gradually widely used on a power generation side, a power grid side, and a power consumption side.

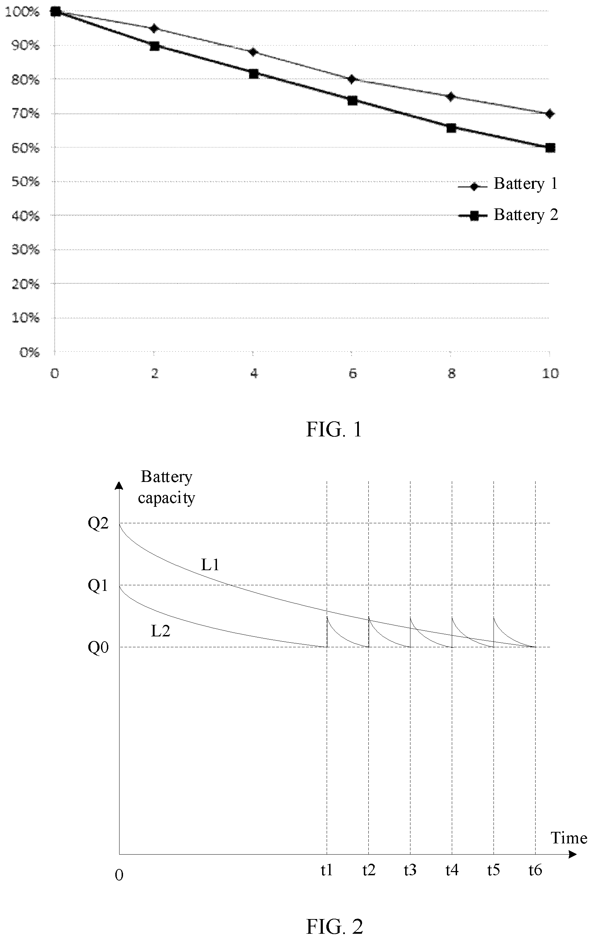

FIG. 1 is a schematic line graph of state of health attenuation of a battery.

In the figure, a horizontal axis indicates time, measured in years, and a vertical axis indicates a state of health (State of Health, SOH) of the battery. The SOH of the battery indicates a current available capacity of the battery. An SOH attenuation problem is common in electrochemical cells (batteries for short). To be specific, an available capacity of a battery gradually decreases with elapsing of service life. In addition, due to different initial performance and different operating conditions of batteries, SOH attenuation of the batteries also varies. For example, in FIG. 1, SOH attenuation of a battery 2 is more serious than that of a battery 1.

FIG. 2 is a schematic line graph of phased battery capacity calibration.

To enable an energy storage system using a battery to meet a capacity requirement during use, in an implementation, a sufficient capacity margin is provided in an initial design stage, to compensate for attenuation of a battery capacity. When Q0 indicates the capacity requirement, this manner corresponds to a curve L1. Q2 indicates an initial capacity in a one-time full configuration solution. In this solution, costs in the initial stage greatly increase. In another solution, a sufficient capacity is configured through phased battery capacity calibration. This manner corresponds to a curve L2. Q1 indicates a configured initial capacity. 11, t2, ..., and t6 indicate moments of phased battery capacity calibration. In this manner, a required initial capacity can be reduced. However, an SOH of a battery added through phased battery capacity calibration is different from that of an existing battery configured in an initial stage. Therefore, clear bucket effect occurs. To be specific, a battery with a smaller SOH is fully charged or discharged faster. A battery management system (Battery Management System, BMS) triggers shutdown for protection. As a result, a capacity of the added battery cannot be fully utilized, causing waste.

## SUMMARY

This application provides an energy storage system, a control method for an energy storage system, and a photovoltaic power generation system, to reduce impact of bucket effect on an energy storage system, and more fully utilize a battery capacity.

According to a first aspect, this application provides an energy storage system. The energy storage system is configured to store electric energy, and the energy storage system may perform charging or discharging. The energy storage system includes a battery cluster, a direct current converter, a controller, and at least one power conversion system. The energy storage system includes at least one direct current branch, and each direct current branch includes a battery cluster and a direct current converter that are connected to each other. The direct current converter is configured to perform direct current conversion on a direct current provided by the battery cluster. The power conversion system is configured to perform power conversion on direct currents provided by all direct current branches. A quantity of power conversion systems may be the same as or different from a quantity of direct current converters. Each battery cluster includes at least two energy storage modules that are connected in series. Each energy storage module includes a battery module. All or some of the energy storage modules include a first equalization circuit. Each battery module includes at least two batteries. The batteries in the battery module may be connected in series; or the batteries may be first connected in series to form battery strings, and then the battery strings are connected in parallel. The controller is configured to: control the first equalization circuit, to balance electricity quantities of battery modules in the battery cluster, and determine operating power to be allocated to each power converter and each direct current converter.

In the energy storage system provided in this application, battery clusters are not directly connected in parallel, each battery cluster is located in one direct current branch, and each battery cluster is connected to one direct current converter. This implements independent operation of the battery clusters. First equalization circuits included in the battery cluster are configured to equalize electricity quantities of battery modules. This improves equalization performance between battery modules. Electricity quantities can be further equalized during battery module-level phased deployment and spare part replacement. In addition, operating power is allocated to the power conversion system and the direct current converter, so that each cluster is independently managed, and flexible battery cluster-level phased deployment can be further performed.

To sum up, in the energy storage system provided in this application, equalization performance of the energy storage system is improved, and impact of bucket effect on the energy storage system is reduced, so that a battery capacity can be more fully utilized. In addition, this facilitates flexible battery module-level and battery cluster-level phased deployment.

The controller in this application may be a one-level controller or a multi-level controller. When the controller is a multi-level controller, a previous-level controller may control a next-level controller. The controller may be independently integrated on a printed circuit board (Printed circuit board, PCB); or the controller may be physically divided into a plurality of parts, the parts are separately disposed on PCBs at different positions in the energy storage system, and the parts cooperate to implement a control function.

In a possible implementation, an output end of the battery cluster included in each direct current branch is connected to an input end of the direct current converter included in the direct current branch, and the direct current converter is configured to perform direct current conversion on a direct current provided by the battery cluster.

The direct current converter may be a boost (Boost) circuit, a buck (Buck) circuit, or a buck-boost (Buck-Boost) circuit. This is not specifically limited in this application.

In a possible implementation, the controller determines operating power of all power conversion systems based on a power scheduling instruction and maximum allowed operating power of each power conversion system and each direct current converter. The power scheduling instruction indicates a sum of the operating power of all the power conversion systems. The power scheduling instruction may be a delivered instruction, or may be an instruction generated by the controller.

It can be understood that, when all the power conversion systems have same specifications and operate normally without power derating, same power is allocated to all the power conversion systems.

Power is separately allocated to each power conversion system, so that each power conversion system is separately controlled.

In a possible implementation, the energy storage system includes n power conversion systems and m direct current converters, where n and m are integers greater than 1. The controller is configured to: when the sum of the operating power is less than or equal to a smallest value of a sum of maximum allowed operating power of the n power conversion systems and a sum of maximum allowed operating power of all the direct current converters, determine, based on the sum of the operating power and maximum allowed operating power of each power conversion system, operating power to be allocated to an $i^{th}$ power conversion system, where i = 1, 2, ..., and n. When the sum of the operating power is greater than the smallest value, the controller determines, based on the smallest value and the maximum allowed operating power of each power conversion system, operating power to be allocated to the $i^{th}$ power conversion system.

In a possible implementation, the controller determines operating power of all direct current converters based on a power scheduling instruction, maximum allowed operating power of each power conversion system and each direct current converter, and a third parameter corresponding to each battery cluster. The power scheduling instruction indicates a sum of the operating power of all the power conversion systems.

Power is separately allocated to each direct current converter, so that each direct current converter is separately controlled, and each cluster is independently managed. This helps ensure high utilization of the battery cluster.

In a possible implementation, the energy storage system includes n power conversion systems and m direct current converters, where n and m are integers greater than 1. The controller is configured to: during discharging of the energy storage system, when the sum of the operating power is greater than a smallest value of a sum of maximum allowed operating power of the n power conversion systems and a sum of maximum allowed operating power of all the direct current converters, determine, based on the smallest value and each third parameter, operating power to be allocated to a $j^{th}$ direct current converter, where j = 1, 2, ..., and m.

In a possible implementation, the controller is further configured to: during charging of the energy storage system, when the sum of the operating power is greater than the smallest value of the sum of the maximum allowed operating power of the n power conversion systems and the sum of the maximum allowed operating power of all the direct current converters, determine, based on the smallest value and each third parameter, operating power to be allocated to the $j^{th}$ direct current converter; or when the sum of the operating power is less than or equal to the smallest value, determine, based on each third parameter and the sum of the operating power, operating power to be allocated to the $j^{th}$ direct current converter.

In a possible implementation, the controller is further configured to: when the operating power to be allocated to the $j^{th}$ direct current converter is greater than maximum allowed operating power of the $j^{th}$ direct current converter, use the maximum allowed operating power of the $j^{th}$ direct current converter as the operating power to be allocated to the $j^{th}$ direct current converter. This avoids damage to the direct current converter.

In a possible implementation, when a new direct current branch is added, the controller further determines operating power of a direct current converter in the new direct current branch based on a third parameter corresponding to a battery cluster in the new direct current branch, maximum allowed operating power of the direct current converter in the new direct current branch, the power scheduling instruction, maximum allowed operating power of each original power conversion system and each original direct current converter, and a third parameter corresponding to each original battery cluster.

In this implementation, capacities can be automatically equalized in module-level phased deployment and spare part replacement scenarios.

In a possible implementation, the energy storage system further includes a direct current bus, and the battery cluster and the direct current converter that are included in each direct current branch are connected in series and then connected to the direct current bus. The direct current bus may be independently disposed, or may be disposed in a combiner box. This is not specifically limited in this application.

The direct current converter is configured to compensate for a difference between an output voltage of the battery cluster and a voltage of the direct current bus. The direct current converter may be a boost circuit or a buck-boost circuit. The controller is further configured to control an operating status of the direct current converter.

In some embodiments, the battery cluster included in the direct current branch supplies power to the direct current converter included in the direct current branch.

In some other embodiments, the direct current converter included in the direct current branch obtains power from the direct current bus.

In still some other embodiments, the battery cluster and the direct current bus supply power to the direct current converter in a contention-based manner. To be specific, when a voltage of the battery cluster included in the direct current branch is higher than or equal to the voltage of the direct current bus, the battery cluster included in the direct current branch supplies power to the direct current converter included in the direct current branch; or when a voltage of the battery cluster included in the direct current branch is lower than the voltage of the direct current bus, the direct current converter included in the direct current branch obtains power from the direct current bus.

In a possible implementation, the controller is specifically configured to determine operating power of all power conversion systems based on a power scheduling instruction and maximum allowed operating power of each power conversion system and each direct current branch, where the power scheduling instruction indicates a sum of the operating power of all the power conversion systems.

In a possible implementation, the controller is specifically configured to determine maximum allowed operating power of each direct current branch based on maximum allowed operating power corresponding to each of the direct current converter and the battery cluster in each direct current branch.

In actual application, the maximum allowed operating power of each direct current branch is equal to a sum of the maximum allowed operating power corresponding to the direct current converter and the battery cluster.

In a possible implementation, the energy storage system includes n power conversion systems and m direct current branches, where n and m are integers greater than 1. The controller is specifically configured to: when the sum of the operating power is less than or equal to a smallest value of a sum of maximum allowed operating power of the n power conversion systems and a sum of maximum allowed operating power of all the direct current branches, determine, based on the sum of the operating power and maximum allowed operating power of each power conversion system, operating power to be allocated to an $i^{th}$ power conversion system, where i = 1, 2, ..., and n. The controller is further configured to: when the sum of the operating power is greater than the smallest value, determine, based on the smallest value and the maximum allowed operating power of each power conversion system, operating power to be allocated to the $i^{th}$ power conversion system.

In a possible implementation, the controller is further configured to determine operating power of all direct current branches based on a power scheduling instruction, maximum allowed operating power of each power conversion system and each direct current branch, and a third parameter corresponding to each battery cluster, where the power scheduling instruction indicates the sum of the operating power of all the power conversion systems.

In a possible implementation, the energy storage system includes n power conversion systems and m direct current branches, where n and m are integers greater than 1. The controller is specifically configured to: during discharging of the energy storage system, when the sum of the operating power is greater than a smallest value of a sum of maximum allowed operating power of the n power conversion systems and a sum of maximum allowed operating power of all the direct current branches, determine, based on the smallest value and each third parameter, operating power to be allocated to a $j^{th}$ direct current branch, where $j = 1, 2, ...,$ and m.

In a possible implementation, the controller is further configured to: during charging of the energy storage system, when the sum of the operating power is greater than the smallest value of the sum of the maximum allowed operating power of the n power conversion systems and the sum of the maximum allowed operating power of all the direct current branches, determine, based on the smallest value and each third parameter, operating power to be allocated to the $j^{th}$ direct current branch; or when the sum of the operating power is less than or equal to the smallest value, determine, based on each third parameter and the sum of the operating power, operating power to be allocated to the $j^{th}$ direct current branch.

In a possible implementation, the controller is further configured to: when the operating power to be allocated to the $j^{th}$ direct current branch is greater than maximum allowed operating power of the $j^{th}$ direct current branch, use the maximum allowed operating power of the $j^{th}$ direct current branch as the operating power to be allocated to the $j^{th}$ direct current branch.

In a possible implementation, when a new direct current branch is connected to the energy storage system, the controller is further configured to determine operating power of a direct current branch in the new direct current branch based on a third parameter corresponding to a battery cluster in the new direct current branch, maximum allowed operating power of the direct current branch in the new direct current branch, the power scheduling instruction, maximum allowed operating power of each original power conversion system and each original direct current branch, and a third parameter corresponding to each original battery cluster.

In a possible implementation, the third parameter includes a state of health (State of Health, SOH), a state of energy (State of Energy, SOE), and a rated capacity Q.

The SOE indicates a current available electricity quantity of the battery cluster.

In a possible implementation, the third parameter includes a state of charge SOC, a state of health SOH, and a rated capacity Q. An SOE may be determined based on information such as the SOC, the SOH, and the Q.

In a possible implementation, the first equalization circuit includes a first controllable switch and a second controllable switch. A positive output end of the battery module is connected to a first end of the first controllable switch. A second end of the first controllable switch is connected to a first end of the second controllable switch. A second end of the second controllable switch is connected to a negative output end of the battery module. The second end of the first controllable switch is a positive output end of the energy storage module. The negative output end of the battery module is a negative output end of the energy storage module.

The first controllable switch and the second controllable switch may be disposed in the battery module, or may be integrated with a battery monitoring unit (Battery Monitoring Unit, BMU); or the first controllable switch and the second controllable switch may be independently designed on a PCB, and then the PCB is integrated in or outside the battery module. The first controllable switch and the second controllable switch may be insulated gate bipolar transistors (Insulated Gate Bipolar Transistor, IGBT), metal-oxide semiconductor field-effect transistors (Metal Oxide Semiconductor Field Effect Transistor, MOSFET), silicon carbide metal-oxide semiconductor field-effect transistors (Silicon Carbide Metal Oxide Semiconductor, SiC MOSFET), mechanical switches, or any combination thereof.

In a possible implementation, when the energy storage module is in a charging state, when determining that the battery cluster is in a charging cutoff state, the controller determines a to-be-equalized battery module based on first parameters corresponding to all batteries in the battery cluster, and then controls a first equalization circuit corresponding to the to-be-equalized battery module, to bypass the to-be-equalized battery module.

In a possible implementation, when the energy storage module is in a charging state, the controller is configured to: determine a largest value of first parameters of batteries included in each of all battery modules; determine a to-be-equalized battery module when a first parameter deviation between largest values corresponding to the battery modules is greater than or equal to a first preset deviation value, where the to-be-equalized battery module includes a battery with a largest first parameter; and then, first control both the first controllable switch and the second controllable switch to be turned off, and after first preset time, control the second controllable switch to be turned on, to bypass the to-be-equalized battery module. To be specific, charging of the to-be-equalized battery module stops, and a remaining battery module continues to be charged. This equalizes electricity quantities of battery modules.

If the first preset deviation value is not reached, second-level equalization control does not need to be performed.

When the first controllable switch and the second controllable switch are MOS transistors, the first preset time is greater than dead time of the first controllable switch.

In a possible implementation, when the energy storage module is in a discharging state, when determining that the battery cluster is in a discharging cutoff state, the controller determines a to-be-equalized battery module based on first parameters corresponding to all batteries in the battery cluster, and then controls a first equalization circuit corresponding to the to-be-equalized battery module, to bypass the to-be-equalized battery module.

In a possible implementation, when the energy storage module is in a discharging state, the controller is configured to: determine a smallest value of first parameters of batteries included in all battery modules; determine a to-be-equalized battery module when a first parameter deviation between smallest values corresponding to the battery modules is greater than or equal to a second preset deviation value, where the to-be-equalized battery module includes a battery with a smallest first parameter; and then, first control both the first controllable switch and the second controllable switch to be turned off, and after first preset time, control the second controllable switch to be turned on, so that discharging of the to-be-equalized battery module stops, and a remaining battery module continues to discharge. This equalizes electricity quantities of battery modules.

In a possible implementation, the controller is further configured to: first control both the first controllable switch and the second controllable switch to be turned off, and after second preset time, control the first controllable switch to be turned on, so that the bypassed to-be-equalized battery module is reconnected to the battery cluster.

When the first controllable switch and the second controllable switch are MOS transistors, the second preset time is greater than dead time of the second controllable switch.

In a possible implementation, the controller is further configured to: when a quantity of battery modules not bypassed in the battery cluster is less than a lower limit of a quantity, stop continuing to determine a to-be-equalized battery module.

In a possible implementation, when a new battery module is connected to the battery cluster, the controller is further configured to: first control a first controllable switch of the new battery module to be turned off, and control a second controllable switch of the new battery module to be turned on; and when a first parameter corresponding to an original battery module is the same as a first parameter corresponding to the new battery module, control the second controllable switch to be turned off, and after second preset time, control the first controllable switch to be turned on.

In this implementation, battery module-level phased deployment can be flexibly performed.

In a possible implementation, the first equalization circuit includes a direct current/direct current conversion circuit. The direct current/direct current conversion circuit may be a boost (Boost) circuit or a buck-boost (Buck-Boost) circuit. The direct current/direct current conversion circuit adjusts an output voltage of the battery module and cooperates with the direct current converter, to select a good boost ratio and a good direct current bus voltage, and therefore improve efficiency of the energy storage system.

In actual application, the first equalization circuit in this implementation also has the functions of the first controllable switch and the second controllable switch in the foregoing implementation. To be specific, the first equalization circuit can implement bypass and cut-in functions for the battery module, and provides an additional direct current/direct current conversion function.

In a possible implementation, to improve efficiency of the energy storage system during operation, the controller can further control, according to an efficiency instruction, an operating status of a first equalization circuit corresponding to the efficiency instruction, so as to control an output voltage of an energy storage module corresponding to the efficiency instruction.

The efficiency instruction may indicate optimal efficiency of the energy storage system, or optimal efficiency of a control target in the energy storage system, where the control target may be some selected battery clusters and/or battery modules. In actual application, there is a correspondence between an output voltage of the energy storage module and efficiency. The correspondence may be calibrated through pre-testing and stored. During operation of the energy storage system, a corresponding voltage may be determined based on efficiency indicated by the efficiency instruction and the correspondence between a voltage and efficiency. The voltage is a voltage that should be output by the energy storage module in this case. The controller controls the operating status of the first equalization circuit based on the voltage.

In a possible implementation, the controller is further configured to: control a first equalization circuit corresponding to each battery module, to adjust an output voltage of the battery module; and control a direct current converter correspondingly connected to each battery cluster, to adjust an overall output voltage of the battery cluster, so as to equalize output of battery clusters through cooperation between the first equalization circuit and the direct current converter.

In a possible implementation, when the energy storage module is in a charging state, the controller is specifically configured to: when determining that the battery cluster is in a charging cutoff state, determine a to-be-equalized battery module based on first parameters corresponding to all batteries in the battery cluster, and then control a first equalization circuit corresponding to the to-be-equalized battery module, to bypass the to-be-equalized battery module.

In a possible implementation, the controller is specifically configured to: determine a largest value of first parameters of batteries included in each of all battery modules; and determine a to-be-equalized battery module when a first parameter deviation between largest values corresponding to the battery modules is greater than or equal to a first preset deviation value, where the to-be-equalized battery module includes a battery with a largest first parameter.

In a possible implementation, when the energy storage module is in a discharging state, the controller is specifically configured to: when determining that the battery cluster is in a discharging cutoff state, determine a to-be-equalized battery module based on first parameters corresponding to all batteries in the battery cluster, and then control a first equalization circuit corresponding to the to-be-equalized battery module, to bypass the to-be-equalized battery module.

In a possible implementation, the controller is specifically configured to: determine a smallest value of first parameters of batteries included in all battery modules; and determine a to-be-equalized battery module when a first parameter deviation between smallest values corresponding to the battery modules is greater than or equal to a second preset deviation value, where the to-be-equalized battery module includes a battery with a smallest first parameter.

In a possible implementation, the controller is further configured to control the first equalization circuit, so that the bypassed to-be-equalized battery module is reconnected to the battery cluster.

In a possible implementation, the controller is further configured to: when a quantity of battery modules not bypassed in the battery cluster is less than a lower limit of a quantity, stop continuing to determine a to-be-equalized battery module.

In a possible implementation, when a new energy storage module is connected to the battery cluster, the controller is further configured to: first control a first equalization circuit of the new energy storage module, to bypass a battery module of the new energy storage module; and when a first parameter corresponding to an original battery module is the same as a first parameter of the battery module of the new energy storage module, control the first equalization circuit of the new energy storage module, to connect the battery module of the new energy storage module to the battery cluster.

In a possible implementation, the first parameter is a voltage or a state of charge SOC.

In a possible implementation, the first equalization circuit is integrated in the battery module.

In a possible implementation, each battery is connected in parallel to a second equalization circuit, and each second equalization circuit includes a third controllable switch and a resistor that are connected in series. The second equalization circuit is turned on when the third controllable switch is turned on, to consume an electricity quantity of the battery through the resistor. The controller is further configured to: obtain a second parameter corresponding to each battery in the battery module, obtain an average value of second parameters, determine, as a to-be-equalized battery, a battery corresponding to a second parameter whose deviation from the average value is greater than a first preset deviation value, and control a second equalization circuit connected in parallel to the to-be-equalized battery to be turned on.

In a possible implementation, the second parameter is a voltage of the battery, or a state of charge SOC of the battery.

In a possible implementation, the power conversion system is a direct current/alternating current converter, configured to convert a direct current into an alternating current.

According to a second aspect, this application further provides a control method for an energy storage system. The method is applied to the energy storage system provided in the foregoing implementations, and the method includes:

controlling a first equalization circuit, to balance electricity quantities of battery modules in a battery cluster; and allocating operating power to all power conversion systems, and allocating operating power to all direct current converters.

In the foregoing control method, battery module-level electricity quantity equalization and battery cluster-level electricity quantity equalization are implemented. This improves equalization performance of the energy storage system, and reduces impact of bucket effect on the energy storage system, so that a capacity of a new battery can be fully utilized.

In a possible implementation, a battery cluster and a direct current converter that are included in each direct current branch are connected in parallel, the direct current converter is configured to perform direct current conversion on a direct current provided by the battery cluster, and the allocating operating power to all power conversion systems specifically includes:

determining operating power of all the power conversion systems based on a power scheduling instruction and maximum allowed operating power of each power conversion system and each direct current converter, where the power scheduling instruction indicates a sum of the operating power of all the power conversion systems.

In a possible implementation, the energy storage system includes n power conversion systems and m direct current converters, n and m are integers greater than 1, and the determining operating power of all the power conversion systems based on a power scheduling instruction and maximum allowed operating power of each power conversion system and each direct current converter specifically includes:

when the sum of the operating power is less than or equal to a smallest value of a sum of maximum allowed operating power of the n power conversion systems and a sum of maximum allowed operating power of all the direct current converters, determining, based on the sum of the operating power and maximum allowed operating power of each power conversion system, operating power to be allocated to an $i^{th}$ power conversion system, where i = 1, 2, ...,

and n; or

when the sum of the operating power is greater than the smallest value, determining, based on the smallest value and the maximum allowed operating power of each power conversion system, operating power to be allocated to the i$^{th}$ power conversion system.

In a possible implementation, an output end of a battery cluster included in each direct current branch is connected to an input end of a direct current converter included in the direct current branch, the direct current converter is configured to perform direct current conversion on a direct current provided by the battery cluster, and the allocating operating power to the direct current converter specifically includes:

determining operating power of all the direct current converters based on a power scheduling instruction, maximum allowed operating power of each power conversion system and each direct current converter, and a third parameter corresponding to each battery cluster, where the power scheduling instruction indicates a sum of the operating power of all the power conversion systems.

In a possible implementation, the energy storage system includes n power conversion systems and m direct current converters, n and m are integers greater than 1, and during discharging of the energy storage system, the determining operating power of all the direct current converters based on a power scheduling instruction, maximum allowed operating power of each power conversion system and each direct current converter, and a third parameter corresponding to each battery cluster specifically includes:

when the sum of the operating power is greater than a smallest value of a sum of maximum allowed operating power of the n power conversion systems and a sum of maximum allowed operating power of all the direct current converters, determining, based on the smallest value and each third parameter, operating power to be allocated to a j' direct current converter, where j = 1, 2, ..., and m.

In a possible implementation, the energy storage system includes n power conversion systems and m direct current converters, n and m are integers greater than 1, and during charging of the energy storage system, the determining operating power of all the direct current converters based on a power scheduling instruction, maximum allowed operating power of each power conversion system and each direct current converter, and a third parameter corresponding to each battery cluster specifically includes:

when the sum of the operating power is greater than the smallest value of the sum of the maximum allowed operating power of the n power conversion systems and the sum of the maximum allowed operating power of all the direct current converters, determining, based on the smallest value and each third parameter, operating power to be allocated to the j$^{th}$ direct current converter; or

when the sum of the operating power is less than or equal to the smallest value, determining, based on each third parameter and the sum of the operating power, operating power to be allocated to the j$^{th}$ direct current converter.

In a possible implementation, to avoid a case that operating power allocated to a direct current converter is greater than maximum allowed operating power of the direct current converter, the method further includes:

when the operating power to be allocated to the j$^{th}$ direct current converter is greater than maximum allowed operating power of the j$^{th}$ direct current converter, using the maximum allowed operating power of the j$^{th}$ direct current converter as the operating power to be allocated to the j$^{th}$ direct current converter.

In a possible implementation, when a new direct current branch is added, to implement flexible battery cluster-level phased deployment, the method further includes:

determining operating power of a direct current converter in the new direct current branch based on a third parameter corresponding to a battery cluster in the new direct current branch, maximum allowed operating power of the direct current converter in the new direct current branch, the power scheduling instruction, maximum allowed operating power of each original power conversion system and each original direct current converter, and a third parameter corresponding to each original battery cluster.

During battery cluster-level accessory replacement or maintenance, a battery cluster in which accessory replacement or maintenance is completed may also be connected to the energy storage system in the foregoing manner.

In a possible implementation, the energy storage system further includes a direct current bus, the battery cluster and the direct current converter that are included in each direct current branch are connected in series and then connected to the direct current bus, the direct current converter is configured to compensate for a difference between an output voltage of the battery cluster and a voltage of the direct current bus, and the allocating operating power to all power conversion systems specifically includes:

determining operating power of all the power conversion systems based on a power scheduling instruction and maximum allowed operating power of each power conversion system and each direct current branch, where the power scheduling instruction indicates a sum of the operating power of all the power conversion systems.

In a possible implementation, the method further includes:

determining maximum allowed operating power of each direct current branch based on maximum allowed operating power corresponding to each of the direct current converter and the battery cluster in each direct current branch.

In a possible implementation, the energy storage system includes n power conversion systems and m direct current branches, n and m are integers greater than 1, and the determining operating power of all the power conversion systems based on a power scheduling instruction and maximum allowed operating power of each power conversion system and each direct current branch specifically includes:

when the sum of the operating power is less than or equal to a smallest value of a sum of maximum allowed operating power of the n power conversion systems and a sum of maximum allowed operating power of all the direct current branches, determining, based on the sum of the operating power and maximum allowed operating power of each power conversion system, operating power to be allocated to an $i^{th}$ power conversion system, where i = 1, 2, ..., and n; or

when the sum of the operating power is greater than the smallest value, determining, based on the smallest value and the maximum allowed operating power of each power conversion system, operating power to be allocated to the $i^{th}$ power conversion system.

In a possible implementation, the method further includes and specifically includes:
determining operating power of all direct current branches based on a power scheduling instruction, maximum allowed operating power of each power conversion system and each direct current branch, and a third parameter corresponding to each battery cluster, where the power scheduling instruction indicates the sum of the operating power of all the power conversion systems.

In a possible implementation, the energy storage system includes n power conversion systems and m direct current branches, n and m are integers greater than 1, and during discharging of the energy storage system, the determining operating power of all direct current branches based on a power scheduling instruction, maximum allowed operating power of each power conversion system and each direct current branch, and a third parameter corresponding to each battery cluster specifically includes:
when the sum of the operating power is greater than a smallest value of a sum of maximum allowed operating power of the n power conversion systems and a sum of maximum allowed operating power of all the direct current branches, determining, based on the smallest value and each third parameter, operating power to be allocated to a $j^{th}$ direct current branch, where j = 1, 2, ..., and m.

In a possible implementation, during charging of the energy storage system, the determining operating power of all direct current branches based on a power scheduling instruction, maximum allowed operating power of each power conversion system and each direct current branch, and a third parameter corresponding to each battery cluster specifically includes:

when the sum of the operating power is greater than the smallest value of the sum of the maximum allowed operating power of the n power conversion systems and the sum of the maximum allowed operating power of all the direct current branches, determining, based on the smallest value and each third parameter, operating power to be allocated to the $j^{th}$ direct current branch; or

when the sum of the operating power is less than or equal to the smallest value, determining, based on each third parameter and the sum of the operating power, operating power to be allocated to the $j^{th}$ direct current branch.

In a possible implementation, the method further includes:
when the operating power to be allocated to the $j^{th}$ direct current branch is greater than maximum allowed operating power of the $j^{th}$ direct current branch, using the maximum allowed operating power of the $j^{th}$ direct current branch as the operating power to be allocated to the $j^{th}$ direct current branch.

In a possible implementation, when a new direct current branch is connected to the energy storage system, the method further includes:
determining operating power of a direct current branch in the new direct current branch based on a third parameter corresponding to a battery cluster in the new direct current branch, maximum allowed operating power of the direct current branch in the new direct current branch, the power scheduling instruction, maximum allowed operating power of each original power conversion system and each original direct current branch, and a third parameter corresponding to each original battery cluster.

In a possible implementation, the third parameter includes a state of health SOH, a state of energy SOE, and a rated capacity Q.

In a possible implementation, the third parameter includes a state of charge SOC, a state of health SOH, and a rated capacity Q.

In a possible implementation, when the energy storage module is in a charging state, the controlling the first equalization circuit, to balance electricity quantities of battery modules in the battery cluster specifically includes:

when it is determined that the battery cluster is in a charging cutoff state, determining a largest value of first parameters of batteries included in each of all battery modules;
determining a to-be-equalized battery module when a deviation between largest values corresponding to the battery modules is greater than or equal to a first preset deviation value, where the to-be-equalized battery module includes a battery with a largest first parameter; and
controlling a first equalization circuit corresponding to the to-be-equalized battery module, to bypass the to-be-equalized battery module.

In a possible implementation, when the energy storage module is in a discharging state, the controlling the first equalization circuit, to balance electricity quantities of battery modules in the battery cluster specifically includes:

when it is determined that the battery cluster is in a discharging cutoff state, determining a smallest value of first parameters of batteries included in all battery modules;
determining a to-be-equalized battery module when a deviation between smallest values corresponding to the battery modules is greater than or equal to a second preset deviation value, where the to-be-equalized battery module includes a battery with a smallest first parameter; and
controlling a first equalization circuit corresponding to the to-be-equalized battery module, to bypass the to-be-equalized battery module.

In a possible implementation, after a charging or discharging process is completed, the method further includes: controlling the first equalization circuit, so that the bypassed to-be-equalized battery module is reconnected to the battery cluster.

In a possible implementation, the method further includes:
when a quantity of battery modules not bypassed in the battery cluster is less than a lower limit of a quantity, stopping continuing to determine a to-be-equalized battery module.

In a possible implementation, when a new battery module is connected to the battery cluster, to implement flexible battery module-level phased deployment, the method further includes:
when a first parameter corresponding to an original battery module is the same as a first parameter corresponding to the new battery module, controlling a first equalization circuit of the new battery module, to connect the new battery module to the battery cluster.

During battery module-level accessory replacement or maintenance, a battery module in which accessory replacement or maintenance is completed may also be connected to the battery cluster in the foregoing manner.

In a possible implementation, the first parameter is a voltage or a state of charge SOC.

In a possible implementation, the method further includes:
obtaining a second parameter corresponding to each battery in the battery module, obtaining an average value of second parameters, determining, as a to-be-equalized battery, a battery corresponding to a second parameter whose deviation from the average value is greater than a third preset deviation value, and controlling a second equalization circuit connected in parallel to the to-be-equalized battery to be turned on, where the second equalization circuit is configured to release a capacity of the battery when the second equalization circuit is turned on.

In the foregoing method, electricity quantities of batteries of battery modules are balanced, so that a battery capacity can be fully utilized.

In a possible implementation, the second parameter is a voltage or a state of charge SOC.

According to a third aspect, this application further provides a photovoltaic power generation system. The photovoltaic power generation system includes the energy storage system provided in the foregoing implementations, and further includes a plurality of photovoltaic modules. The plurality of photovoltaic modules are configured to convert light energy into electric energy, and then transmit the electric energy to the energy storage system.

In the energy storage system of the photovoltaic power generation system, battery clusters are not directly connected in parallel, each battery cluster is located in one direct current branch, and each battery cluster is connected to one direct current converter. Therefore, independent operation of the battery clusters is implemented. First equalization circuits in the battery cluster are configured to equalize electricity quantities of battery modules. This improves equalization performance between battery modules. Electricity quantities can be further equalized during battery module-level phased deployment and spare part replacement. In addition, operating power is allocated to the power conversion system and the direct current converter, so that each cluster is independently managed, and flexible battery cluster-level phased deployment can be further performed. Therefore, in the energy storage system, equalization performance of the energy storage system is improved, impact of bucket effect on the energy storage system is reduced, and a battery capacity can be fully utilized. In addition, this facilitates flexible battery module-level and battery cluster-level phased deployment.

## BRIEF DESCRIPTION OF DRAWINGS

FIG. 1 is a schematic line graph of state of health attenuation of a battery;

FIG. 2 is a schematic line graph of phased battery capacity calibration;

FIG. 3 is a schematic diagram of a circuit topology of an energy storage system according to this application;

FIG. 4 is a schematic diagram of an energy storage system according to an embodiment of this application;

FIG. 5 is a schematic diagram of a battery cluster according to an embodiment of this application;

FIG. 6 is a schematic diagram of an energy storage module according to an embodiment of this application;

FIG. 7A shows a curve of a voltage change that occurs when one battery module is bypassed in a discharging state according to an embodiment of this application;

FIG. 7B shows a curve of a current change that occurs when one battery module is bypassed in a discharging state according to an embodiment of this application;

FIG. 8A shows a curve of a voltage change that occurs when one battery module is bypassed in a charging state according to an embodiment of this application;

FIG. 8B shows a curve of a current change that occurs when one battery module is bypassed in a charging state according to an embodiment of this application;

FIG. 9A shows a curve of a voltage change during charging of a battery cell according to an embodiment of this application;

FIG. 9B shows a curve of a voltage change during discharging of a battery cell according to an embodiment of this application;

FIG. 10 is a schematic diagram of another battery cluster according to an embodiment of this application;

FIG. 11 is a schematic diagram of another energy storage system according to an embodiment of this application;

FIG. 12 is a schematic diagram of a controller 30 according to an embodiment of this application;

FIG. 13 is a schematic diagram of still another energy storage system according to an embodiment of this application;

FIG. 14A is a schematic diagram of another battery cluster according to an embodiment of this application;

FIG. 14B is a schematic diagram of yet another energy storage system according to an embodiment of this application;

FIG. 14C is a schematic diagram of still yet another energy storage system according to an embodiment of this application;

FIG. 14D is a schematic diagram of a further energy storage system according to an embodiment of this application;

FIG. 15A is a flowchart of a control method for an energy storage system according to an embodiment of this application;

FIG. 15B is a flowchart of another control method for an energy storage system according to an embodiment of this application;

FIG. 16 is a flowchart of still another control method for an energy storage system according to an embodiment of this application;

FIG. 17A is a flowchart of yet another control method for an energy storage system according to an embodiment of this application;

FIG. 17B is a flowchart of still yet another control method for an energy storage system according to an embodiment of this application;

FIG. 18A is a flowchart of a further control method for an energy storage system according to an embodiment of this application;

FIG. 18B is a flowchart of a still further control method for an energy storage system according to an embodiment of this application;

FIG. 19 is a flowchart of a yet further control method for an energy storage system according to an embodiment of this application; and

FIG. 20 is a schematic diagram of a photovoltaic power generation system according to an embodiment of this application.

## DESCRIPTION OF EMBODIMENTS

To enable persons skilled in the art to better understand technical solutions provided in embodiments of this application, the following first describes an application scenario of technical solutions provided in this application.

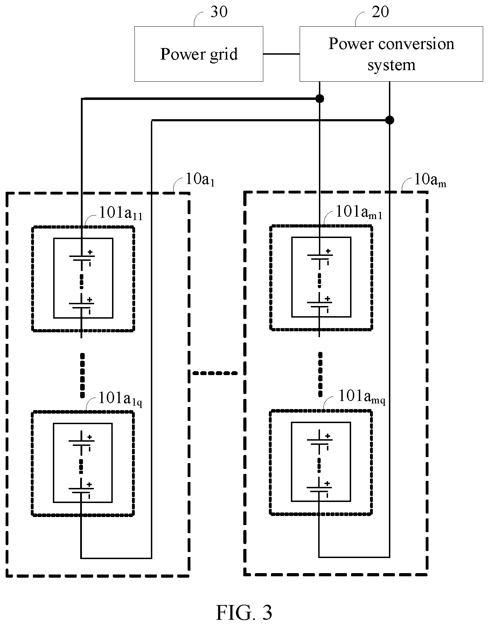

FIG. 3 is a schematic diagram of a circuit topology of an energy storage system according to this application.

The energy storage system includes a power conversion system (Power Conversion System, PCS) 20 and m battery clusters 10a1 to 10am that are connected in parallel. Each battery cluster includes q battery modules.

Both m and q are integers greater than or equal to 1. In actual application, to increase an energy storage capacity of the energy storage system, values of m and q may be large. This is not specifically limited in this application. Each battery module includes at least one battery cell. When each battery module includes a plurality of batteries, the plurality of batteries are connected in series.

The energy storage system may be used in a new energy power generation system such as a photovoltaic power generation system or a wind power generation system. For example, the energy storage system is used in the photovoltaic power generation system. In this case, the energy storage system is configured to: in off-peak hours of power consumption, store electric energy output by a photovoltaic module, or store electric energy provided by a power grid; and in peak hours of power consumption or when an electric energy yield of the photovoltaic module is low, discharge to an alternating-current power grid.

The power conversion system 20 is configured to convert a direct current input by each battery cluster into an alternating current, and then transmit the alternating current to a power grid 30.

To enable the energy storage system to meet a capacity requirement during use, in an implementation, a sufficient margin is provided at an initial design stage, to compensate for attenuation of a battery capacity. However, in this solution, costs in the initial stage greatly increase. In another solution, a sufficient capacity is configured through phased battery capacity calibration. However, an SOH of a battery added through phased battery capacity calibration is different from that of an existing battery configured in an initial stage. Therefore, clear bucket effect occurs. To be specific, a battery with a smaller SOH is fully charged or discharged faster. This triggers shutdown of a BMS for protection. As a result, a capacity of the added battery cannot be fully utilized, causing waste.

To resolve the foregoing problem, embodiments of this application provide an energy storage system, a control method for an energy storage system, and a photovoltaic power generation system, to improve equalization performance of the energy storage system, and reduce impact of bucket effect on the energy storage system, so that a battery capacity can be fully utilized. In addition, this facilitates flexible battery module-level and battery cluster-level phased deployment.

To make persons skilled in the art understand solutions of this application more clearly, the following describes technical solutions in embodiments of this application with reference to accompanying drawings in embodiments of this application.

In descriptions of this application, terms such as "first" and "second" are merely intended for a purpose of description, and shall not be understood as an indication or implication of relative importance or an implicit indication of a quantity of indicated technical features.

In this application, unless otherwise clearly specified and limited, the term "connection" should be understood in a broad sense. For example, the "connection" may be a fixed connection, a detachable connection, or an integrated structure, may be a direct connection, or may be an indirect connection through an intermediary.

An embodiment of this application provides an energy storage system. The following provides specific descriptions with reference to accompanying drawings.

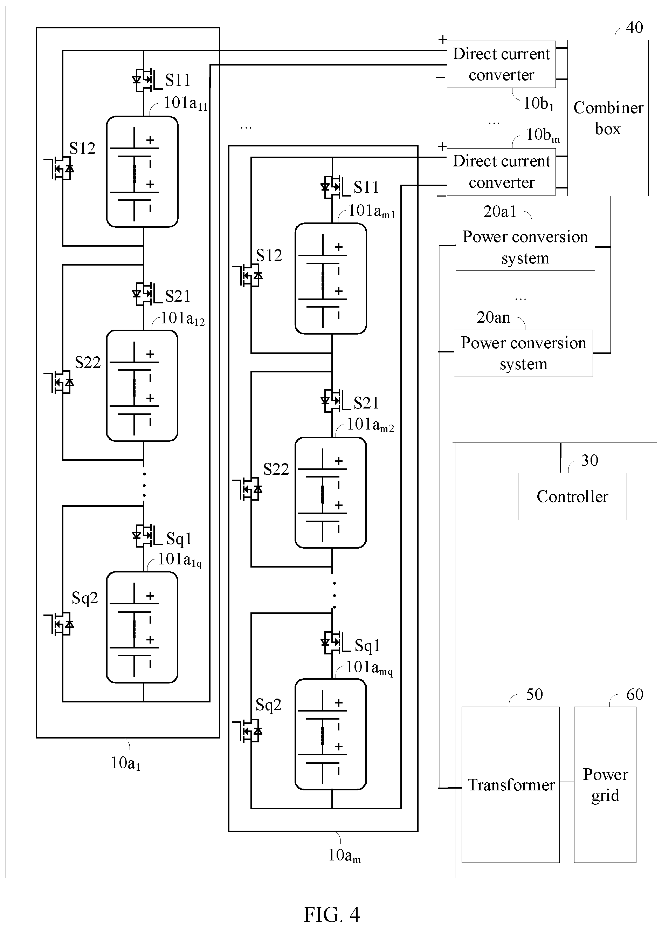

FIG. 4 is a schematic diagram of an energy storage system according to an embodiment of this application.

The energy storage system shown in the figure includes a combiner box 40, m battery clusters connected in parallel, m direct current converters, and n power conversion systems. Both m and n are integers greater than 1.

One battery cluster is connected to one direct current converter to form a direct current branch. The direct current converter is configured to perform direct current conversion on a direct current provided by the battery cluster. That is, the energy storage system includes m direct current branches.

The power conversion system is configured to perform power conversion on a direct current provided by the direct current branch.

Each battery cluster includes m energy storage modules connected in series. Each energy storage module includes a battery module. All or some of the energy storage modules include a first equalization circuit. Each battery module includes at least two batteries. For ease of description, an example in which all of the energy storage modules each include a first equalization circuit is used below for description.

In actual application, a capacity of the energy storage system is usually large, and therefore values of m and n are correspondingly large.

The following provides descriptions with reference to accompanying drawings.

The battery clusters are sequentially 10a1 to 10am, and each battery cluster includes q battery modules.

The battery cluster 10a1 is used as an example, q battery modules are sequentially connected in series to form the battery cluster, and then the battery cluster is correspondingly connected to a direct current converter 10b 1 through a direct current bus (DC bus). Battery modules in battery clusters exchange energy through direct current converters.

Direct current converters corresponding to different battery clusters may be independently controlled, so that each cluster is independently managed. This can effectively reduce impact of bucket effect between battery clusters on the energy storage system.

After the battery clusters and the direct current converters are connected in a one-to-one correspondence, the battery clusters and the direct current converters are aggregated to the combiner box 40. A port on another side of the combiner box is connected to direct current input ends of the n power conversion systems. Alternating current output ends of the n power conversion systems are connected to a low voltage end of a transformer 50, and a high voltage end of the transformer 50 is connected to a power grid 60.

The combiner box 40 is configured to aggregate and allocate currents of direct current buses to which the input ends are connected. There may alternatively be a plurality of combiner boxes 40 in the energy storage system, and the combiner boxes 40 are configured to perform matching between power on two sides.

In some embodiments, the combiner box 40 may also perform direct current (Direct Current, DC)-to-direct current conversion. For example, the combiner box 40 may be a boost combiner box.

In some other embodiments, the combiner box 40 may alternatively not be disposed in the energy storage system. To be specific, an output end of the direct current converter is directly connected to an input end of the power conversion system through the direct current bus. In this case, one or more direct current converters may be connected to each power conversion system. This is not specifically limited in this embodiment of this application.

Values of m and n are not specifically limited in this embodiment of this application. A value of m may or may not be equal to n. Specific values may be determined based on rated power of a single direct current converter and a single power conversion system.

The following describes an implementation of the energy storage unit with reference to a specific example.

An output voltage of a single battery module is 51.2 V, and a quantity of battery modules connected in series in the battery cluster is 21. In this case, a port voltage of the battery cluster is 1075.2 V The direct current converter is a bidirectional DC-to-DC converter that can match a direct current voltage of 1000 V to 1500 V To implement efficient power conversion, a circuit topology used for the direct current converter is usually a non-isolated circuit. For example, a flying-capacitor multi-level circuit, a three-level boost (BOOST) circuit, or a buck (BUCK)-boost circuit may be used.

The power conversion system is a bidirectional direct current-to-alternating current (Alternating Current, AC) converter. A neutral point clamped T-type three-level circuit, a neutral point clamped (Neutral Point Clamped, NPC) circuit, an active neutral point clamped (Active Neutral Point Clamped, ANPC) circuit, a flying-capacitor multi-level circuit, or the like may be used.

Because a port voltage of a battery cell changes with an energy storage capacity, a port output voltage of the battery cluster is an output voltage within a wide range. Therefore, to match a port voltage change range of the battery cluster, the direct current converter and the power conversion system are usually designed to have input and output capabilities within a wide range.

The controller 30 is configured to: control the first equalization circuit, to balance electricity quantities of battery modules in the battery cluster, and determine operating power to be allocated to each power conversion system and each direct current converter.

The controller may be an application-specific integrated circuit (Application-Specific Integrated Circuit, ASIC), a programmable logic device (Programmable Logic Device, PLD), a digital signal processor (Digital Signal Processor, DSP), or a combination thereof. The PLD may be a complex programmable logic device (Complex Programmable Logic Device, CPLD), a field-programmable gate array (Field-programmable Gate Array, FPGA), a generic array logic (Generic Array Logic, GAL), or any combination thereof.

The controller in the foregoing descriptions of this embodiment of this application may be a one-level controller or a multi-level controller. When the controller is a multi-level controller, a previous-level controller may control a next-level controller. The controller may be independently integrated on a printed circuit board (Printed circuit board, PCB); or the controller may be physically divided into a plurality of parts, the parts are separately disposed on PCBs at different positions in the energy storage system, and the parts cooperate to implement a control function. This is not specifically limited in this embodiment of this application.

The battery in this embodiment of this application may be a lithium-ion battery, a lead-acid battery, a supercapacitor, or the like, or a combination of the foregoing types. This is not specifically limited in this embodiment of this application.

The power conversion system provided in this embodiment of this application may be a one-level direct current-to-alternating current converter, or may use a two-level converter architecture, to be specific, a series architecture of a direct current-to-direct current converter and a direct current-to-alternating current converter. This is not specifically limited in this embodiment of this application.

In the energy storage system provided in this embodiment of this application, battery clusters are not directly connected in parallel, the battery clusters are located in different direct current branches, and each battery cluster is connected to one direct current converter. Therefore, independent operation of the battery clusters is implemented. First equalization circuits in the battery cluster are configured to equalize electricity quantities of battery modules. This improves equalization performance between battery modules. Electricity quantities can be further equalized during battery module-level phased deployment and spare part replacement. In addition, operating power is allocated to the power conversion system and the direct current converter, so that each cluster is independently managed, and flexible battery cluster-level phased deployment can be further performed. To sum up, in the energy storage system, equalization performance of the energy storage system is improved, impact of bucket effect on the energy storage system is reduced, and a capacity of a new battery can be fully utilized. In addition, this facilitates flexible battery module-level and battery cluster-level phased deployment.

The following describes an operating principle of the energy storage system with reference to a specific implementation. An example in which the controller is a multi-level controller is used in the following descriptions.

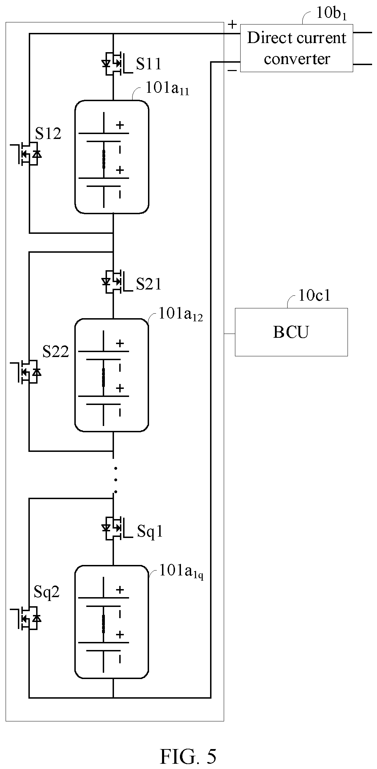

FIG. 5 is a schematic diagram of a battery cluster according to an embodiment of this application.

The energy storage system includes m battery clusters, and the quantity m may be flexibly adjusted based on a capacity of the energy storage system. Each battery cluster includes q battery modules connected in series: battery modules $101a_{11}$ to $101a_{1q}$ in the figure.

Each energy storage module includes at least one battery. When the energy storage module includes a plurality of batteries, the plurality of batteries may be connected in series or in parallel; or the plurality of batteries may be first connected in series to form battery strings, and then a plurality of battery strings are connected in parallel. This is not specifically limited in this embodiment of this application. For ease of description, an example in which the plurality of batteries in the battery module are connected in series is used in the following descriptions.

One battery control unit (Battery Control Unit, BCU) is correspondingly disposed for each battery cluster.

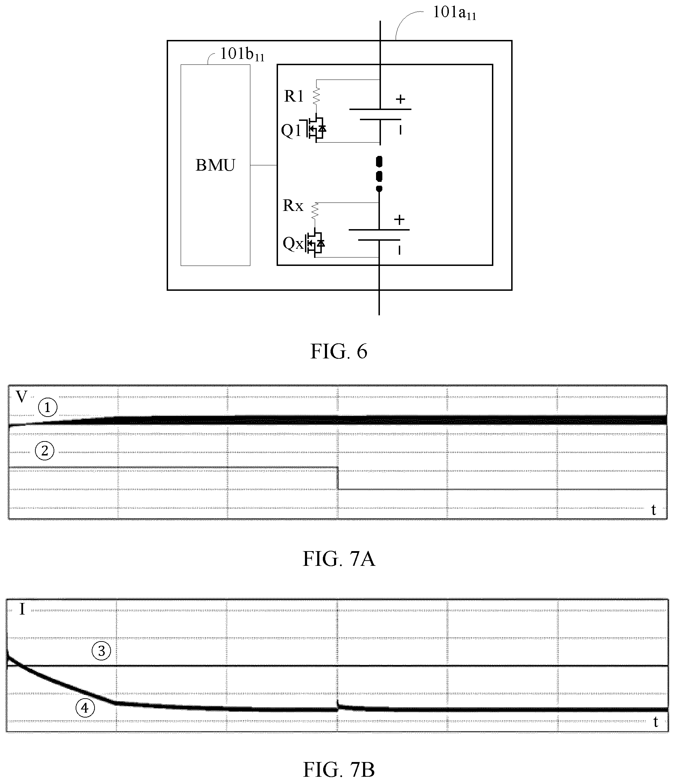

FIG. 6 is a schematic diagram of an energy storage module according to an embodiment of this application.

In this technical solution of this application, the energy storage module serves as a minimum energy storage and management unit. To detect and control the energy storage module, an equalization circuit and a battery monitoring unit (Battery Monitoring Unit, BMU) are further disposed in each energy storage module. The battery module $101a_{11}$ is used below as an example for description.

The battery module includes x batteries connected in series, and each battery is connected in parallel to one equalization circuit. Each equalization circuit includes a third controllable switch (Q1 to Qx in the figure) and a resistor (R1 to Rx in the figure) that are connected in series. When the switch is turned on, the equalization circuit is turned on, and the battery discharges heat through the resistor to consume a capacity, so as to equalize capacities of the batteries. A BMU $101b_{11}$ mainly includes a circuit for battery management, a communication circuit, a power supply circuit, and the like, to monitor statuses of batteries in a corresponding battery module, equalize electricity quantities of the batteries, and exchange information with an upper-layer BCU in real time, so as to efficiently manage and control the entire battery cluster.

Still as shown in FIG. 5, the battery module $101a_{11}$ is still used as an example. After being connected in series to a switch device S11, the battery module is connected in parallel to a switch device S 12. A direction of a body diode of S 11 is opposite to a direction of a battery voltage, and a direction of a body diode of S 12 is opposite to the direction of the body diode of S 11, to prevent the battery module from being directly turned on through the body diode and causing a short circuit.

In some other embodiments, an additional diode connected in parallel may be used to replace the body diode of the switch device.

Similarly, S21 and S22 correspond to the battery module 101an, and by analogy, Sq1 and Sq2 correspond to the battery module $101a_{1q}$. The switch device used in the battery module may be an IGBT, a MOSFET, a SiC MOSFET, a mechanical switch, a combination of the foregoing types, or the like. The BMU sends a control signal to the switch device to control an operating status of the power switch device. In a possible implementation, the control signal is a pulse width modulation (Pulse width modulation, PWM) signal.

The switch device may be disposed in the battery module, or may be integrated with the BMU; or the switch device may be independently designed on a PCB, and then the PCB is integrated in or outside the battery module. This is not specifically limited in this embodiment of this application.

The following describes a principle of implementing battery equalization in the solution of this application.

As shown in FIG. 4 to FIG. 6, battery equalization control in this application is divided into three levels, which are specifically equalization control in a battery module, equalization control between battery modules, and equalization control between battery clusters, to implement equalization for a difference between batteries, a difference between battery modules, and a difference between battery clusters, and flexibly manage battery modules and battery clusters.

The following first describes equalization control in a battery module.

Equalization control in a battery module, namely, first-level equalization control, controls equalization of electricity quantities of batteries (which may also be referred to as battery cells in some scenarios) in the battery module.

The BMU obtains a second parameter corresponding to each battery in a battery module to which the BMU belongs, obtains an average value of second parameters, determines, as a to-be-equalized battery, a battery corresponding to a second parameter whose deviation from the average value is greater than a third preset deviation value, and controls a second equalization circuit connected in parallel to the to-be-equalized battery to be turned on.

The second parameter is a voltage of the battery, or a state of charge (State of Charge, SOC) of the battery.

After the BMU controls the equalization circuit connected to the battery to be turned on, the second equalization circuit releases a capacity through a resistor, to equalize electricity quantities of the batteries in the battery module.

The following describes equalization control between battery modules in a battery cluster.

Second-level equalization control in the three-level equalization control is equalization control between battery modules in a battery cluster, and is implemented through switch devices correspondingly connected to the battery modules.

As shown in FIG. 5, an example in which equalization control needs to be performed on the battery module $101a_{11}$ is used below for description.

The BCU controls S11 and S12 to bypass the battery module $101a_{11}$, to implement active equalization at high power. In this case, an equalization current is large, and a specific value of the equalization current is related to a battery capacity and a charging ratio (or a discharging ratio), and may reach hundreds of amperes, to efficiently and quickly equalize electricity quantities.

The second-level equalization control may be performed during charging or discharging of the energy storage system. The battery cluster shown in FIG. 5 is still used below as an example for specific description.

FIG. 7A shows a curve of a voltage change that occurs when one battery module is bypassed in a discharging state according to an embodiment of this application.

The curve is a curve of a voltage change with time. A curve ① is a curve of a change of a direct current bus voltage of a direct current converter. A curve ② is a curve of a voltage of a battery cluster.

It can be learned that, during charging of the energy storage system, when one battery module is bypassed to equalize electricity quantities, a voltage change of the battery cluster does not cause a significant change of the direct current bus voltage of the direct current converter, and an operating status of the direct current converter may remain stable.

FIG. 7B shows a curve of a current change that occurs when one battery module is bypassed in a discharging state according to an embodiment of this application.

The curve is a curve of a current change with time. A curve ③ is a curve of a current change of a filter capacitor on a battery side in a direct current converter. A curve ④ is a curve of a current of a battery cluster.

It can be learned that, during charging of the energy storage system, a current of the filter capacitor on the battery side in the direct current converter does not significantly change with a current change of the battery cluster.

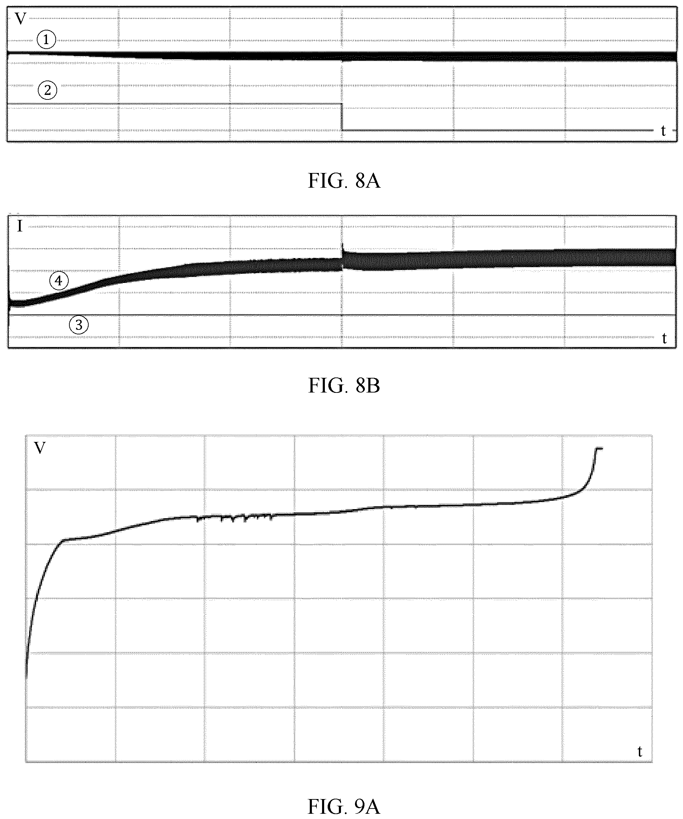

FIG. 8A shows a curve of a voltage change that occurs when one battery module is bypassed in a charging state according to an embodiment of this application.

The curve is a curve of a voltage change with time. A curve ① is a curve of a change of a direct current bus voltage of a direct current converter. A curve ② is a curve of a voltage of a battery cluster.

It can be learned that, during discharging of the energy storage system, when one battery module is bypassed to equalize electricity quantities, a voltage change of the battery cluster does not cause a significant change of the direct current bus voltage of the direct current converter, and an operating status of the direct current converter may remain stable.

FIG. 8B shows a curve of a current change that occurs when one battery module is bypassed in a charging state according to an embodiment of this application.

The curve is a curve of a current change with time. A curve ③ is a curve of a current change of a filter capacitor on a battery side in a direct current converter. A curve ④ is a curve of a current of a battery cluster.

It can be learned that, during discharging of the energy storage system, a current of the filter capacitor on the battery side in the direct current converter does not significantly change with a current change of the battery cluster.

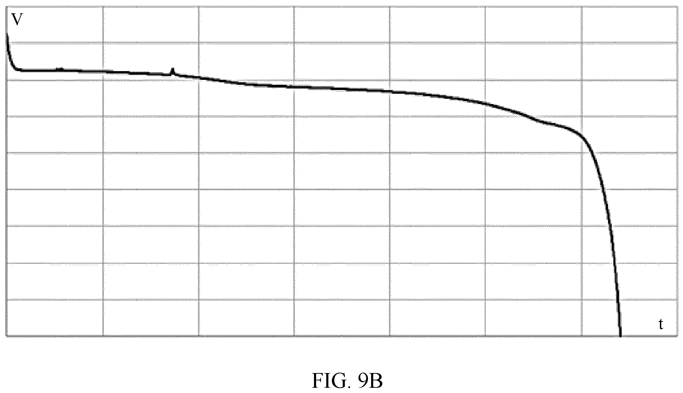

Refer to FIG. 9A and FIG. 9B. FIG. 9A shows a curve of a voltage change during charging of a battery cell according to an embodiment of this application. FIG. 9B shows a curve of a voltage change during discharging of a battery cell according to an embodiment of this application.

As shown in the figure, the battery cell is a lithium-ion battery. It can be learned from FIG. 9A that a battery voltage significantly changes when the battery cell is almost fully charged. It can be learned from FIG. 9B that a battery voltage also significantly changes when the battery cell is almost fully discharged. Therefore, the battery voltage may be used as a basis for determining, to implement equalization control on modules in a battery cluster.

The following describes a specific control process of the BCU.

The BCU determines whether an operating status of a current battery cluster is a charging state or a discharging state.

When the BCU determines that the battery cluster is in the charging state, the BCU further determines whether the current battery cluster is in a preset charging cutoff state. In some embodiments, when a voltage of the battery cluster is greater than or equal to a first preset voltage threshold, the BCU determines that the battery cluster is in the charging cutoff state.

When determining that the current battery cluster is in the charging cutoff state, the BCU determines a to-be-equalized battery module based on first parameters corresponding to all batteries in the battery cluster, and then controls a first equalization circuit corresponding to the to-be-equalized battery module, to bypass the to-be-equalized battery module. The first parameter may be a voltage or an SOC. An example in which the first parameter is a voltage is used below for description.

The BCU determines a largest value of first parameters of batteries included in each of all battery modules, and determines a to-be-equalized battery module when a first parameter deviation between largest values corresponding to the battery modules is greater than or equal to a first preset deviation value, where the to-be-equalized battery module includes a battery with a largest first parameter. If the first preset deviation value is not reached, second-level equalization control does not need to be performed. Then the BCU first controls both the first controllable switch and the second controllable switch to be turned off, and after first preset time, controls the second controllable switch to be turned on, to bypass the to-be-equalized battery module. To be specific, charging of the to-be-equalized battery module stops, and a remaining battery module continues to be charged.

FIG. 5 is used as an example for specific description. The BCU obtains a largest value of first parameters of all batteries in the battery module 101an, and similarly, obtains largest values respectively corresponding to battery modules $1101a_{11}$ to $101a_{1n}$, that is, obtains n largest values in total. When it is determined that a deviation between two of the n largest values is greater than or equal to the first preset deviation value, for example, a deviation between largest values of the battery module $1101a_{12}$ and the battery module $101a_{1n}$ is greater than the first preset deviation value, a battery module, in the battery cluster, to which a battery with a largest first parameter belongs is bypassed.

Then the BCU determines whether a quantity of battery modules that currently continue to be charged reaches a lower limit of a quantity of modules. If the quantity of battery modules does not reach the lower limit of a quantity of battery modules, the BCU continues to repeat the foregoing steps to determine whether a module needs to be bypassed. If the quantity of battery modules reaches the lower limit of a quantity of battery modules, the second-level equalization control may be ended.

When the BCU determines that the battery cluster is in the discharging state, the BCU further determines whether the current battery cluster is in a preset discharging cutoff state. In some embodiments, when a voltage of the battery cluster is less than or equal to a second preset voltage threshold, the BCU determines that the battery cluster is in the discharging cutoff state.

When determining that the current battery cluster is in the discharging cutoff state, the BCU determines a to-be-equalized battery module based on first parameters corresponding to all batteries in the battery cluster, and then controls a first equalization circuit corresponding to the to-be-equalized battery module, to bypass the to-be-equalized battery module. An example in which the first parameter is a voltage is used below for description.

The BCU determines a smallest value of first parameters of batteries included in all battery modules, and determines a to-be-equalized battery module when a first parameter deviation between smallest values corresponding to the battery modules is greater than or equal to a second preset deviation value, where the to-be-equalized battery module includes a battery with a smallest first parameter. Then the BCU first controls both the first controllable switch and the second controllable switch to be turned off, and after first preset time, controls the second controllable switch to be turned on, to bypass the to-be-equalized battery module. To be specific, discharging of the to-be-equalized battery module stops, and a remaining battery module continues to discharge. If the second preset deviation value is not reached, second-level equalization control does not need to be performed.

FIG. 5 is used as an example for specific description. The BCU obtains a smallest value of first parameters of all batteries in the battery module 101an, and similarly, obtains smallest values respectively corresponding to battery modules $1101a_{12}$ to $101a_{1n}$, that is, obtains n smallest values in total. When it is determined that a deviation between two of the n smallest values is greater than or equal to the second preset deviation value, for example, a deviation between smallest values of the battery module $1101a_{12}$ and the battery module $101a_{1n}$ is greater than the first preset deviation value, a battery module, in the battery cluster, to which a battery with a smallest first parameter belongs is bypassed.

Then the BCU determines whether a quantity of battery modules that currently continue to discharge reaches a lower limit of a quantity of battery modules. If the quantity of battery modules does not reach the lower limit of a quantity of battery modules, the BCU continues to repeat the foregoing steps to determine whether a module needs to be bypassed. If the quantity of battery modules reaches the lower limit of a quantity of battery modules, the second-level equalization control may be ended.

In the foregoing control process, the battery voltage is used as a basis for determining whether the battery cluster is in the charging or discharging cutoff state and whether the second-level electricity quantity equalization is to be enabled. In some other embodiments, an SOC may alternatively be used as a basis. Details are not described herein in this embodiment of this application.

The following describes an implementation of controlling, by the BCU, bypassing of a battery module. Still as shown in FIG. 5, an example in which the battery module 101 an is bypassed is used for description.

During bypassing of the battery module $101a_{11}$, S11 is first controlled to be turned off, and after first preset time, S12 is controlled to be turned on.

The first preset time is greater than dead time (Dead time) of S11, to avoid a direct short circuit between two ends of the battery module $101a_{11}$. Duration of the first preset time is not specifically limited in this embodiment of this application.

When the battery module needs to be reconnected to the battery cluster, S12 is first turned off, and after second preset time, S11 is controlled to be turned on. The second preset time is greater than dead time (Dead time) of S12, to avoid a direct short circuit between the two ends of the battery module $101a_{11}$. Duration of the second preset time is not specifically limited in this embodiment of this application.

In some embodiments, specifications and models of S11 and S12 are the same, and the specified first preset time may be the same as the second preset time.

A principle of bypassing or stopping bypassing another battery module is similar, and details are not described herein again in this embodiment of this application.

The following describes an implementation in which the second-level equalization control is used in a replacement scenario for a battery module or a phased deployment scenario for a battery module. In this embodiment, a phased deployment scenario for a battery module, to be specific, a scenario in which a new battery module is added to a battery cluster, is used as an example for description. A principle in a case in which a battery module is replaced is similar, and details are not described below again.

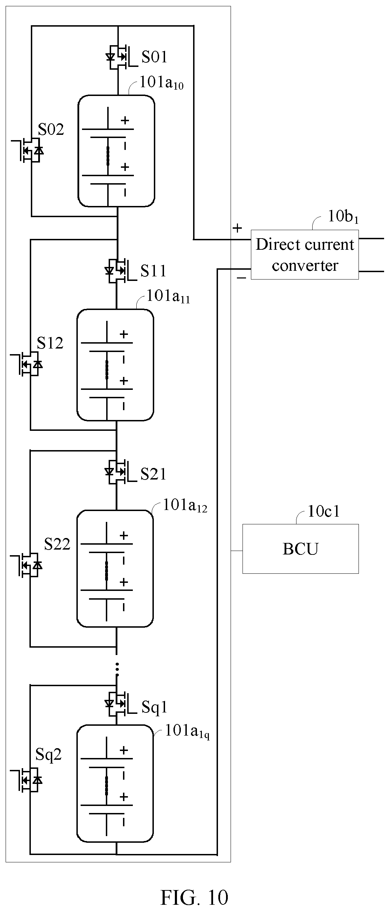

FIG. 10 is a schematic diagram of another battery cluster according to an embodiment of this application.

A difference between the battery cluster shown in FIG. 10 and the battery cluster shown in FIG. 5 lies in that the battery cluster shown in FIG. 10 further includes a battery module $101a_{10}$ added through phased deployment.

When the battery module $101a_{10}$ is connected to the battery cluster, a BCU 10c1 first controls S01 to be turned off, and controls S02 to be turned on, so that the battery module $101a_{10}$ is first in a bypassed state.

The battery module $101a_{10}$ transmits, through a BMU of the battery module $101a_{10}$, a first parameter of each battery in the battery module $101a_{10}$ to a BCU of a battery cluster to which the battery module $101a_{10}$ belongs.

After obtaining the first parameter of each battery in the battery module $101a_{10}$, the BCU determines a first parameter corresponding to the battery module $101a_{10}$, controls an original battery module in the battery cluster to continue to operate, and continuously monitors a first parameter corresponding to the battery module that is operating.

For example, when the first parameter is a voltage, a sum of voltages of all batteries is a voltage of the battery module.

When the first parameter corresponding to the battery module that is operating is consistent with the first parameter corresponding to the battery module $101a_{10}$, the BCU controls S02 to be turned off, and after second preset time, controls S1 to be turned on, so that the battery module $101a_{10}$ is connected to the battery cluster and is connected in series to the original battery module.

For ease of description, in this embodiment of this application, an example in which only one battery module is added through phased deployment is used for description. A principle in a case in which a plurality of battery modules are added is similar. This is not specifically limited in this embodiment of this application.

To sum up, in the energy storage system provided in this application, equalization performance of the energy storage system is improved, and impact of bucket effect on the energy storage system is reduced, so that a capacity of a new battery can be fully utilized. In addition, this facilitates flexible battery module-level phased deployment.

The following describes a specific implementation of third-level equalization control, namely, battery cluster-level equalization control.

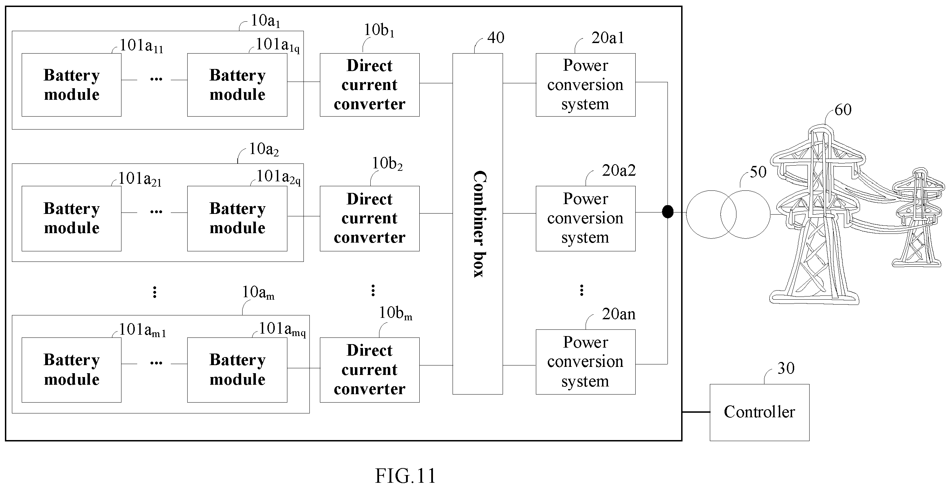

FIG. 11 is a schematic diagram of another energy storage system according to an embodiment of this application.

A controller 30 is configured to obtain third parameters of m battery clusters, where the third parameters are denoted as E1, E2, ..., and Em. The controller 30 determines operating power of each direct current converter and each power conversion system based on the obtained third parameters and a power scheduling instruction. The following provides specific descriptions.

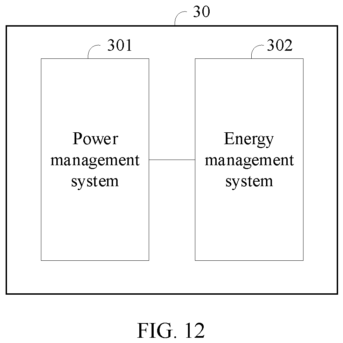

FIG. 12 is a schematic diagram of a controller 30 according to an embodiment of this application.

The controller 30 in the figure includes a battery management system (Battery Management System, BMS) 301 and an energy management system (Energy Management System, EMS) 302. A BMU included in the controller is not shown.

The battery management system 301 obtains third parameters of m battery clusters. In some embodiments, the battery management system 301 obtains the third parameter from the BMU, and sends the third parameter to the energy management system 302.

The third parameter of the battery cluster includes an SOC, a state of health (State of Health, SOH), a state of energy (State of Energy, SOE), a rated capacity Q, and other information of the battery cluster. The SOE indicates a current available electricity quantity of the battery cluster.

The energy management system 302 determines operating power of each direct current converter and each power conversion system based on the third parameter and a power scheduling instruction, and sends corresponding operating power to a controller of the direct current converter and a controller of the power conversion system.

The power scheduling instruction may be delivered by an upper-layer scheduling control system of the energy management system 302, or determined by the energy management system 302. This is not specifically limited in this embodiment of this application.

The following specifically describes an implementation of allocating power by the controller.

The power scheduling instruction indicates a value of total operating power of n power conversion systems in the energy storage system, where the total operating power is denoted as Pt. Pa1, Pa2, ..., and Pan respectively indicate power allocated to the n power conversion systems. Pb1, Pb2, ..., and Pbm respectively indicate power allocated to m direct current converters. Pi indicates maximum allowed operating power of an $i^{th}$ power conversion system, and Pj indicates maximum allowed operating power of a $j^{th}$ direct current converter, where i = 1, 2, ..., and n, and j = 1, 2, ..., and m.

It is assumed that Pt meets the following formula:

$$Pt \leq \min \left( \sum_1^n Pi, \sum_1^m Pj \right) \tag{1}$$

To be specific, when Pt is less than or equal to a smallest value of a sum of maximum allowed operating power (namely, peak power) of the n power conversion systems and a sum of maximum allowed operating power of the m direct current converters, operating power Pai of the $i^{th}$ power conversion system is allocated in the following manner:

$$Pai = \frac{Pi}{\sum_1^n pi} \times Pt \tag{2}$$

In some embodiments, when all the power conversion systems have same specifications and operate normally without power derating, the operating power Pai of the $i^{th}$ power conversion system is allocated in the following manner:

$$Pai = Pt/n \tag{3}$$

It is assumed that Pt meets the following formula:

$$Pt > \min \left( \sum_1^n Pi, \sum_1^m Pj \right) \tag{4}$$

To be specific, when total power output by the energy storage system to a transformer is greater than a smallest value of a sum of maximum allowed operating power of the n power conversion systems and a sum of maximum allowed operating power of the m direct current converters, the operating power Pai of the $i^{th}$ power conversion system is allocated in the following manner:

$$Pai = \frac{Pi}{\sum_1^n pi} \times \min \left( \sum_1^n Pi, \sum_1^m Pj \right) \tag{5}$$

When Pt meets the formula (4), for the m direct current converters that operate independently, during discharging of a battery module, operating power Pbj of the $j^{th}$ direct current converter is allocated in the following manner:

$$Pbj = \frac{SOEj}{\sum_1^m SOEj} \times \min \left( \sum_1^n Pi, \sum_1^m Pj \right) \tag{6},$$

where

SOEj is an SOE of a battery cluster to which the $j^{th}$ direct current converter is connected.

When Pt meets the formula (1), for the m direct current converters that operate independently, during charging of the battery module, the operating power Pbj of the $j^{th}$ direct current converter is allocated in the following manner:

$$Pbj = \frac{(Qj \times SOEj) - SOEj}{\sum_1^m [(Qj \times SOEj) - SOEj]} \times Pt \tag{7}, \text{where}$$

where

Qj is a rated capacity of the battery cluster to which the $j^{th}$ direct current converter is connected.

When Pt meets the formula (4), for the m direct current converters that operate independently, during discharging of the battery module, the operating power Pbj of the $j^{th}$ direct current converter is allocated in the following manner:

$$Pbj = \frac{(Qj \times SOEj) - SOEj}{\sum_1^m [(Qj \times SOEj) - SOEj]} \times \min \left( \sum_1^n Pi, \sum_1^m Pj \right) \tag{8}$$

In the foregoing formulas, the SOE and Qj are expressed in a same unit. When the SOE is expressed as a percentage, a dimension of the SOE is converted into a dimension of Qj based on a parameter of the energy storage system. Details are not described herein in this embodiment of this application.

It should be noted that, if power allocated to the direct current converter exceeds maximum allowed operating power of the direct current converter, the direct current converter operates at the maximum power.

In some embodiments, if some BMSs do not provide SOE data, SOE data may alternatively be equivalently calculated comprehensively based on an SOC, an SOH, Q, and other information. This also falls within the protection scope of this application.

The following describes an implementation in which the third-level equalization control is used in a replacement scenario for a battery cluster or a phased deployment scenario for a battery cluster. In this embodiment, a phased deployment scenario for a battery cluster, to be specific, a scenario in which a new battery cluster is added to the energy storage system, is used as an example for description. A principle in a case in which a battery cluster is replaced is similar, and details are not described below again.

In this case, the controller determines operating power of a direct current converter in a new direct current branch based on a third parameter corresponding to a battery cluster in the new direct current branch, maximum allowed operating power of the direct current converter in the new direct current branch, a power scheduling instruction, maximum allowed operating power of each original power conversion system and each original direct current converter, and a third parameter corresponding to each original battery cluster. The following provides specific descriptions.

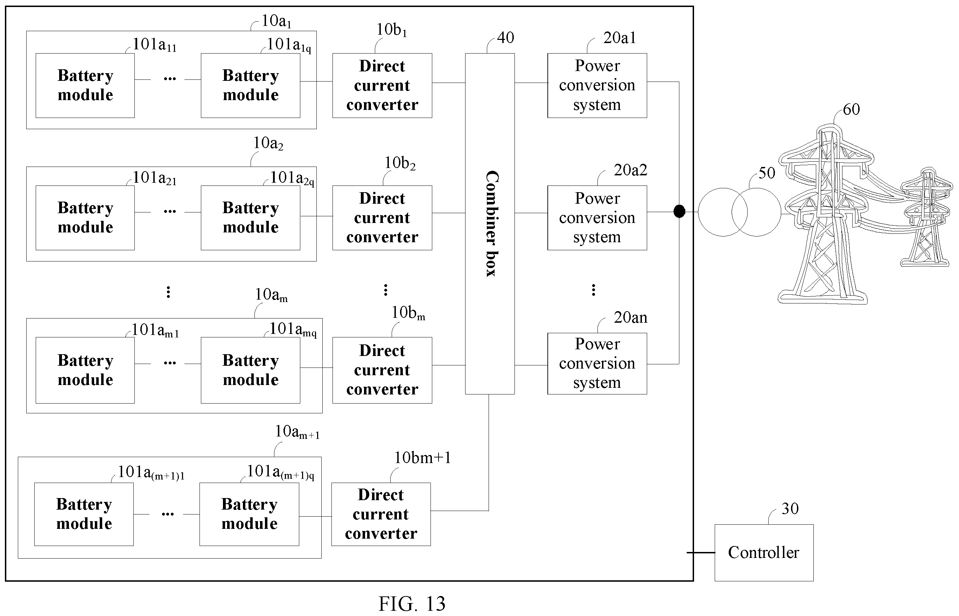

FIG. 13 is a schematic diagram of still another energy storage system according to an embodiment of this application.

An $(m+1)^{th}$ battery cluster added through phased deployment and a corresponding $(m+1)^{th}$ direct current converter are connected as a whole, and then connected to an input end of a combiner box 40. Usually, a quantity of power conversion systems remains unchanged. Therefore, a power allocation manner for each power conversion system is similar to that described in the foregoing embodiment. For details, refer to the formulas (1) to (5). Details are not described herein again.

For m+1 battery clusters, a battery management system 301 sends a third parameter $E_{m+1}$ of the added $(m+1)^{th}$ battery cluster together with information of an original battery cluster to an energy management system. A rule for allocating power by the energy management system to total m+1 direct current converters is similar to that described above, and only m in the original formulas (6) to (8) needs to be updated to m+1.

In some embodiments, when a capacity of the energy storage system is large, a quantity of batteries in a battery module is large, a quantity of battery modules included in a battery cluster is large, and a quantity of battery clusters is large. In this case, to improve control efficiency, a BMS in a controller may include a battery module-level BMU, a battery cluster-level BCU, and a battery cluster array control unit (Smart Array Control Unit, SACU).

To sum up, in the energy storage system provided in this embodiment of this application, each battery cluster operates independently in an architecture. This reduces impact of bucket effect of batteries on the energy storage system, implements active equalization at a large current, increases an equalization speed, shortens equalization time, and improves equalization performance, so that automatic capacity equalization can be implemented in a module-level phased deployment scenario and a spare part replacement scenario, a battery capacity of the entire energy storage system is accurately managed and controlled, and each cluster is independently managed. In addition, flexible battery cluster-level phased deployment can be further implemented, and high utilization of a battery cluster can also be ensured.

It can be understood that an example in which each energy storage module in a battery cluster includes one corresponding first equalization circuit is used in the foregoing descriptions. In actual application, to reduce a quantity of control signals and costs, a first equalization circuit may be correspondingly disposed only for some energy storage modules in a battery cluster.

The following describes an implementation of another battery cluster.

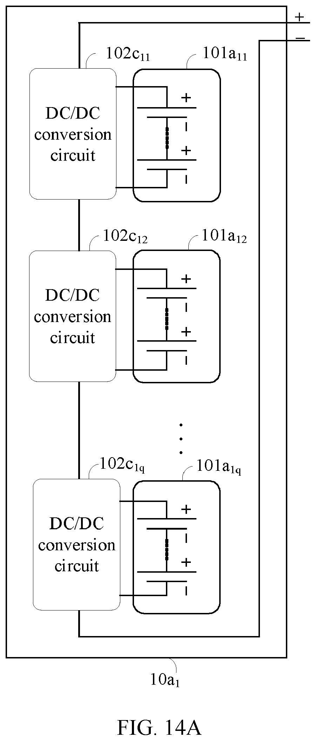

FIG. 14A is a schematic diagram of an implementation of another battery cluster according to an embodiment of this application.

A difference between the battery cluster in FIG. 14A and the battery cluster shown in FIG. 5 lies in that a first equalization circuit further includes a DC/DC conversion circuit. For ease of description, an example in which each energy storage module includes a first equalization circuit is still used below for description.

A battery cluster $10a_1$ is used as an example. In this case, battery modules $101a_{11}$ to $101a_{1q}$ in the battery cluster $10a_1$ each are connected to a corresponding DC/DC conversion circuit.

In this case, an input end of the DC/DC conversion circuit is correspondingly connected to an output end of a battery module, and an output end of the DC/DC conversion circuit is correspondingly connected to an output end of an energy storage module.

The DC/DC conversion circuit is configured to boost or reduce an output voltage of the energy storage module correspondingly connected to the DC/DC conversion circuit.

The DC/DC conversion circuit may be a boost (Boost) circuit or a buck-boost (Buck-Boost) circuit.

In actual application, the first equalization circuit in the implementation shown in FIG. 14A also has the functions of the first controllable switch and the second controllable switch in the foregoing implementations. To be specific, the first equalization circuit can implement bypassing and cut-in functions for the battery module. A specific manner of controlling, by the first equalization circuit, bypassing or cut-in of the battery module is similar to corresponding descriptions in FIG. 5 to FIG. 10. The following provides specific descriptions.

The controller first determines whether an operating status of a current battery cluster is a charging state or a discharging state.

When the controller determines that the battery cluster is in the charging state, the controller further determines whether the current battery cluster is in a preset charging cutoff state. In some embodiments, when a voltage of the battery cluster is greater than or equal to a first preset voltage threshold, the controller determines that the battery cluster is in the charging cutoff state.

When determining that the current battery cluster is in the charging cutoff state, the controller determines a to-be-equalized battery module based on first parameters corresponding to all batteries in the battery cluster, and then controls a first equalization circuit corresponding to the to-be-equalized battery module, to bypass the to-be-equalized battery module. The first parameter may be a voltage or an SOC. An example in which the first parameter is a voltage is used below for description.

The controller determines a largest value of first parameters of batteries included in each of all battery modules, and determines a to-be-equalized battery module when a first parameter deviation between largest values corresponding to the battery modules is greater than or equal to a first preset deviation value, where the to-be-equalized battery module includes a battery with a largest first parameter.

If the first preset deviation value is not reached, second-level equalization control does not need to be performed.

Then the controller controls the first equalization circuit, to bypass the to-be-equalized battery module. To be specific, charging of the to-be-equalized battery module stops, and a remaining battery module continues to be charged.

Then the controller determines whether a quantity of battery modules that currently continue to be charged reaches a lower limit of a quantity of modules. If the quantity of battery modules does not reach the lower limit of a quantity of battery modules, the BCU continues to repeat the foregoing steps to determine whether a module needs to be bypassed. If the quantity of battery modules reaches the lower limit of a quantity of battery modules, the second-level equalization control may be ended.

When the controller determines that the battery cluster is in the discharging state, the BCU further determines whether the current battery cluster is in a preset discharging cutoff state. In some embodiments, when a voltage of the battery cluster is less than or equal to a second preset voltage threshold, the controller determines that the battery cluster is in the discharging cutoff state.

When determining that the current battery cluster is in the discharging cutoff state, the controller determines a to-be-equalized battery module based on first parameters corresponding to all batteries in the battery cluster, and then controls a first equalization circuit corresponding to the to-be-equalized battery module, to bypass the to-be-equalized battery module. An example in which the first parameter is a voltage is used below for description.

The controller determines a smallest value of first parameters of batteries included in all battery modules, and determines a to-be-equalized battery module when a first parameter deviation between smallest values corresponding to the battery modules is greater than or equal to a second preset deviation value, where the to-be-equalized battery module includes a battery with a smallest first parameter.

Then the controller controls the first equalization circuit, to bypass the to-be-equalized battery module. To be specific, discharging of the to-be-equalized battery module stops, and a remaining battery module continues to discharge. If the second preset deviation value is not reached, second-level equalization control does not need to be performed.

Then the controller determines whether a quantity of battery modules that currently continue to discharge reaches a lower limit of a quantity of battery modules. If the quantity of battery modules does not reach the lower limit of a quantity of battery modules, the BCU continues to repeat the foregoing steps to determine whether a module needs to be bypassed. If the quantity of battery modules reaches the lower limit of a quantity of battery modules, the second-level equalization control may be ended.

In the foregoing control process, the voltage is used as a basis for determining whether the battery cluster is in the charging or discharging cutoff state and whether the second-level electricity quantity equalization is to be enabled. In some other embodiments, an SOC may alternatively be used as a basis. Details are not described herein in this embodiment of this application.

The controller in the foregoing descriptions may be a BCU.

The following describes an implementation in which the second-level equalization control is used in a replacement scenario for an energy storage module or a phased deployment scenario for an energy storage module. In this embodiment, a phased deployment scenario for an energy storage module, to be specific, a scenario in which a new energy storage module is added to a battery cluster, is used as an example for description. A principle in a case in which an energy storage module is replaced is similar, and details are not described below again.

When a new energy storage module is added to a current battery cluster through phased deployment, the controller first controls a first equalization circuit of the new energy storage module to make an energy storage battery of the new energy storage module be first in a bypassed state.

A battery module of the new energy storage module transmits, through a BMU of the battery module, a first parameter of each battery of the battery module to a BCU of a battery cluster to which the battery module belongs.

After obtaining the first parameter of each battery in the battery module of the new energy storage module, the BCU determines a first parameter corresponding to the battery module of the new energy storage module, and controls an original battery module in the battery cluster to continue to operate, and continuously monitors a first parameter corresponding to the battery module that is operating.

For example, when the first parameter is a voltage, a sum of voltages of all batteries is a voltage of the battery module.

When the first parameter corresponding to the battery module that is operating is consistent with the first parameter corresponding to the battery module of the new energy storage module, the BCU controls the first equalization circuit of the new energy storage module to connect the battery module of the new energy storage module to the battery cluster in series to the original battery module.

For ease of description, in this embodiment of this application, an example in which only one battery module is added through phased deployment is used for description. A principle in a case in which a plurality of battery modules are added is similar. This is not specifically limited in this embodiment of this application.

Further, to improve efficiency of the energy storage system during operation, the controller can further control, according to an efficiency instruction, an operating status of a first equalization circuit corresponding to the efficiency instruction, so as to control an output voltage of an energy storage module corresponding to the efficiency instruction, that is, control an operating status of a corresponding DC/DC conversion circuit according to the efficiency instruction.

The efficiency instruction may indicate optimal efficiency of the energy storage system, or optimal efficiency of a control target in the energy storage system, where the control target may be some selected battery clusters and/or battery modules.

In actual application, there is a correspondence between an output voltage of the energy storage module and efficiency. The correspondence may be calibrated through pre-testing and stored. During operation of the energy storage system, a corresponding voltage may be determined based on efficiency indicated by the efficiency instruction and the correspondence between a voltage and efficiency. The voltage is a voltage that should be output by the energy storage module in this case. The controller controls, according to the voltage control efficiency instruction, a DC/DC conversion circuit in a corresponding energy storage module to boost or reduce an output voltage of a battery module, so that an output voltage of the energy storage module is a voltage corresponding to optimal efficiency.

The controller is further configured to: control a first equalization circuit corresponding to each battery module, to adjust an output voltage of the battery module; and control a direct current converter correspondingly connected to each battery cluster, to adjust an overall output voltage of the battery cluster, so as to equalize output of battery clusters through cooperation between the first equalization circuit and the direct current converter.

To sum up, in the energy storage system provided in this application, equalization performance of the energy storage system is improved, and impact of bucket effect on the energy storage system is reduced, so that a capacity of a new battery can be fully utilized. In addition, this facilitates flexible battery module-level phased deployment. Further, the first equalization circuit of the battery cluster further includes a DC/DC conversion circuit. When a large quantity of battery modules are bypassed in the battery cluster, the controller controls the DC/DC conversion circuit to boost an output voltage of a still connected battery module, to maintain an overall voltage of the battery cluster. To be specific, the DC/DC conversion circuit adjusts an output voltage of the battery module and cooperates with the direct current converter to select a good boost ratio and direct current bus voltage, so as to improve efficiency of the energy storage system.

The following describes an implementation of another energy storage system.

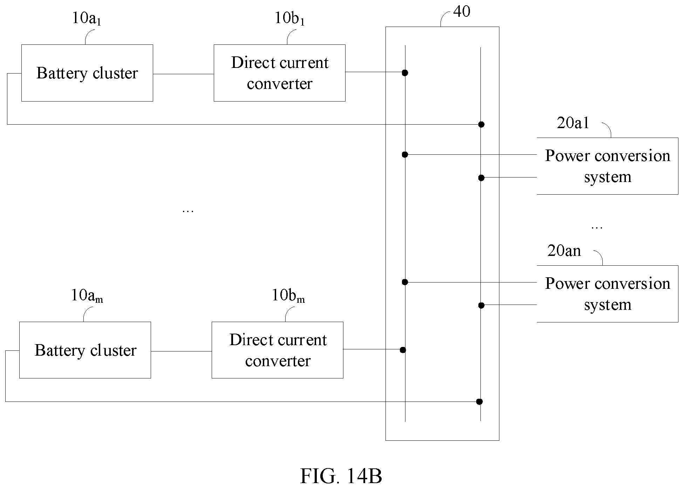

FIG. 14B is a schematic diagram of yet another energy storage system according to an embodiment of this application.

The energy storage system shown in the figure further includes a direct current bus, and the direct current bus includes a positive direct current bus and a negative direct current bus. In some embodiments, the direct current bus may be disposed in a combiner box 40, as shown in FIG. 14B. In some other embodiments, the direct current bus may be separately disposed, that is, the energy storage system may not include a combiner box.

A battery cluster and a direct current converter that are included in each direct current branch are connected in series and then connected to the direct current bus.

A first direct current branch is used below as an example for description. A positive output end of a battery cluster $10a_1$ is connected to a first output end of a direct current converter 10bi, a second output end of the direct current converter $10b_1$ is connected to the positive direct current bus, and a negative output end of the battery cluster $10a_1$ is connected to the negative direct current bus, so that the battery cluster $10a_1$ and the direct current converter $10b_1$ are

connected in series.

The direct current converter $10b_1$ is configured to compensate for a difference between an output voltage of the battery cluster 10ai and a voltage of the direct current bus.

An input end of the direct current converter included in each direct current branch may obtain power in any one of the following three manners.

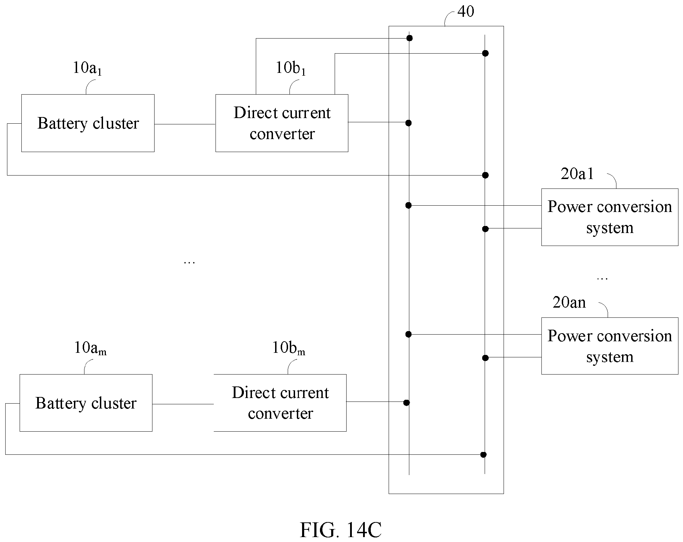

FIG. 14C is a schematic diagram of still yet another energy storage system according to an embodiment of this application.

In a possible implementation, in this implementation, a positive input end of a direct current converter is connected to a positive direct current bus, a negative input end of the direct current converter is connected to a negative direct current bus, and the direct current converter obtains power from the direct current bus side.

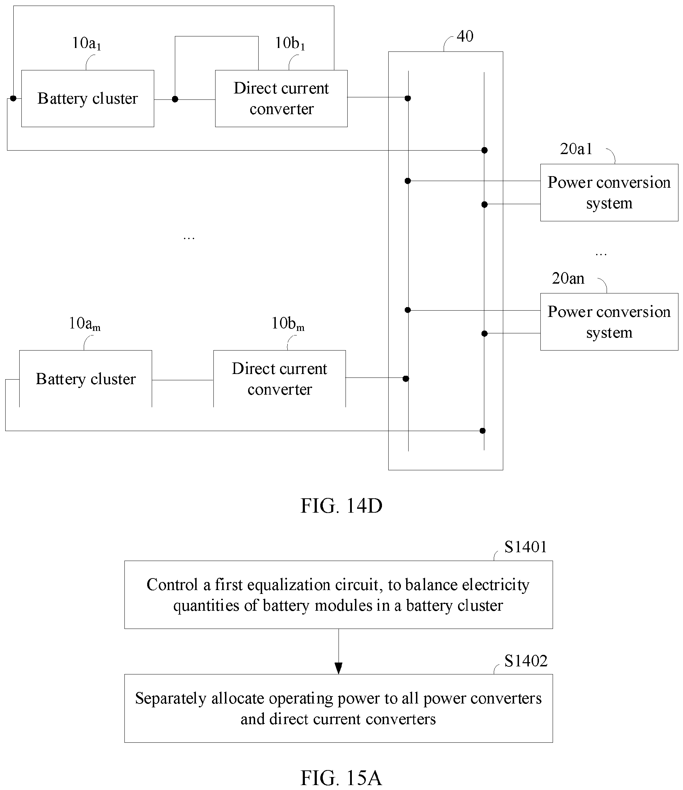

FIG. 14D is a schematic diagram of a further energy storage system according to an embodiment of this application.

In another possible implementation, in this implementation, a positive input end of a direct current converter is connected to a positive output end of a battery cluster, a negative input end of the direct current converter is connected to a negative output end of the battery cluster, and the direct current converter obtains power from the battery cluster side.

In still another possible implementation, a battery cluster or a direct current bus supplies power to a direct current converter in a contention-based manner. To be specific, when an output voltage of the battery cluster is greater than a voltage of the direct current bus, the battery cluster supplies power to the direct current converter; or when a voltage of the direct current bus is greater than a voltage of the battery cluster, the direct current converter obtains power from the direct current bus.

The battery cluster used in the energy storage system may be implemented in the manner in FIG. 5 or FIG. 14A. This is not specifically limited in this embodiment of this application.

The following describes an implementation of allocating, by the controller, operating power to each direct current branch and each power conversion system.

The controller is configured to obtain third parameters of m battery clusters, where the third parameters are denoted as E1, E2, ..., and Em.

The controller determines operating power of each direct current branch and each power conversion system based on the obtained third parameters and a power scheduling instruction. The following provides specific descriptions.

Still refer to the controller shown in FIG. 12. The controller 30 in the figure includes a battery management system (Battery Management System, BMS) 301 and an energy management system (Energy Management System, EMS) 302. A BMU included in the controller is not shown.

The battery management system 301 obtains third parameters of m battery clusters. In some embodiments, the battery management system 301 obtains the third parameter from the BMU, and sends the third parameter to the energy management system 302.

The third parameter of the battery cluster includes an SOC, a state of health (State of Health, SOH), a state of energy (State of Energy, SOE), a rated capacity Q, and other information of the battery cluster. The SOE indicates a current available electricity quantity of the battery cluster.

The energy management system 302 determines operating power of each direct current branch and each power conversion system based on the third parameter and a power scheduling instruction, and sends corresponding operating power to a controller of a corresponding direct current converter and a controller of a corresponding power conversion system.

The power scheduling instruction may be delivered by an upper-layer scheduling control system of the energy management system 302, or determined by the energy management system 302. This is not specifically limited in this embodiment of this application.

The following specifically describes an implementation of allocating power by the controller.

The power scheduling instruction indicates a value of total operating power of n power conversion systems in the energy storage system, where the total operating power is denoted as Pt. Pa1, Pa2, ..., and Pan respectively indicate power allocated to the n power conversion systems. Pb1', Pb2', ..., and Pbm' respectively indicate power allocated to m direct current branches. Pi indicates maximum allowed operating power of an $i^{th}$ power conversion system, and Pj indicates maximum allowed operating power of a $j^{th}$ direct current branch, where i = 1, 2, ..., and n, and j = 1, 2, ..., and m.

The controller may determine maximum allowed operating power of each direct current branch based on maximum allowed operating power corresponding to each of the direct current converter and the battery cluster in each direct current branch. In some embodiments, maximum allowed operating power of a direct current branch is a sum of maximum allowed operating power corresponding to a direct current converter and maximum allowed operating power corresponding to a battery cluster.

It is assumed that Pt meets the following formula:

$$Pt \leq \min \left( \sum_1^n Pi, \sum_1^m Pj' \right) \tag{9}$$

To be specific, when Pt is less than or equal to a smallest value of a sum of maximum allowed operating power (namely, peak power) of the n power conversion systems and a sum of maximum allowed operating power of the m direct current branches, operating power Pai of the $i^{th}$ power conversion system is allocated in the following manner:

$$Pai = \frac{Pi}{\sum_1^n pi} \times Pt \tag{10}$$

In some embodiments, when all the power conversion systems have same specifications and operate normally without power derating, the operating power Pai of the $i^{th}$ power conversion system is allocated in the following manner:

$$Pai = Pt/n \tag{11}$$

It is assumed that Pt meets the following formula:

$$Pt > \min \left( \sum_1^n Pi, \sum_1^m Pj' \right) \tag{12}$$

To be specific, when total power output by the energy storage system to a transformer is greater than a smallest value of a sum of maximum allowed operating power of the n power conversion systems and a sum of maximum allowed operating power of the m direct current branches, the operating power Pai of the $i^{th}$ power conversion system is allocated in the following manner:

$$Pai = \frac{Pi}{\sum_1^n pi} \times \min \left( \sum_1^n Pi, \sum_1^m Pj' \right) \tag{13}$$

When Pt meets the formula (12), for the m direct current branches that operate independently, during discharging of the battery module, operating power Pbj' of the $j^{th}$ direct current branch is allocated in the following manner:

$$Pbj' = \frac{SOEj}{\sum_1^m SOEj} \times \min \left( \sum_1^n Pi, \sum_1^m Pj' \right) \tag{14},$$

where
SOEj is an SOE of a battery cluster to which the $j^{th}$ direct current branch is connected.

When Pt meets the formula (9), for the m direct current branches that operate independently, during charging of the battery module, the operating power Pbj' of the $j^{th}$ direct current branch is allocated in the following manner:

$$Pbj' = \frac{(Qj \times SOEj) - SOEj}{\sum_1^m [(Oi \times SOEi) - SOEi]} \times Pt \tag{15},$$

where
Qj is a rated capacity of the battery cluster to which the $j^{th}$ direct current branch is connected.

When Pt meets the formula (12), for the m direct current branches that operate independently, during discharging of the battery module, the operating power Pbj' of the $j^{th}$ direct current branch is allocated in the following manner:

$$Pbj' = \frac{(Qj \times SOEj) - SOEj}{\sum_1^m [(Qj \times SOEj) - SOEj]} \times \min \left( \sum_1^n Pi, \sum_1^m Pj' \right) \tag{16}$$

In the foregoing formulas, the SOE and Qj are expressed in a same unit. When the SOE is expressed as a percentage, a dimension of the SOE is converted into a dimension of Qj based on a parameter of the energy storage system. Details are not described herein in this embodiment of this application.

It should be noted that, if power allocated to the direct current converter exceeds maximum allowed operating power of the direct current converter, the direct current converter operates at the maximum power.

In some embodiments, if some BMSs do not provide SOE data, SOE data may alternatively be equivalently calculated comprehensively based on an SOC, an SOH, Q, and other information. This also falls within the protection scope of this application.

Still as shown in FIG. 14B, the following describes an implementation in a phased deployment scenario for a battery cluster.

An (m+1)$^{th}$ battery cluster added through phased deployment and a corresponding (m+1)$^{th}$ direct current converter are connected in series to form an (m+1)$^{th}$ direct current branch, and the (m+1)$^{th}$ direct current branch is connected to an input end of a combiner box 40. Usually, a quantity of power conversion systems remains unchanged. Therefore, a power allocation manner for each power conversion system is similar to that described in the foregoing embodiment. For details, refer to the formulas (9) to (14). Details are not described herein again.

For m+1 battery clusters, a battery management system 301 sends a third parameter $E_{m+1}$ of the added (m+1)$^{th}$ battery cluster together with information of an original battery cluster to an energy management system. A rule for allocating power by the energy management system to total m+1 direct current branches is similar to that described above, and only m in the original formulas (14) to (16) needs to be updated to m+1.

To sum up, in the energy storage system provided in this embodiment of this application, each battery cluster operates independently in an architecture. This reduces impact of bucket effect of batteries on the energy storage system, implements active equalization at a large current, increases an equalization speed, shortens equalization time, and improves equalization performance, so that automatic capacity equalization can be implemented in a module-level phased deployment scenario and a spare part replacement scenario, a battery capacity of the entire energy storage system is accurately managed and controlled, and each cluster is independently managed. In addition, flexible battery cluster-level phased deployment can be further implemented, and high utilization of a battery cluster can also be ensured.

Based on the energy storage system provided in the foregoing embodiments, an embodiment of this application further provides a control method for an energy storage system. The following provides specific descriptions with reference to accompanying drawings.

FIG. 15A is a flowchart of a control method for an energy storage system according to an embodiment of this application.

A battery cluster in the energy storage system is implemented in the manner corresponding to FIG. 5. To be specific, a battery cluster and a direct current converter that are included in each direct current branch are connected in series. Details are not described herein again in this embodiment of this application. The method includes the following steps.

S1401: Control a first equalization circuit, to balance capacities of battery modules in the battery cluster.

S1402: Separately allocate operating power to all power conversion systems and direct current converters.

When the battery cluster used in the energy storage system is implemented in the manner in FIG. 14A, to be specific, when a battery cluster and a direct current converter that are included in each direct current branch are connected in series, step S1402 may be replaced with "separately allocating operating power to all power conversion systems and direct current branches".

The following provides descriptions with reference to specific implementations.

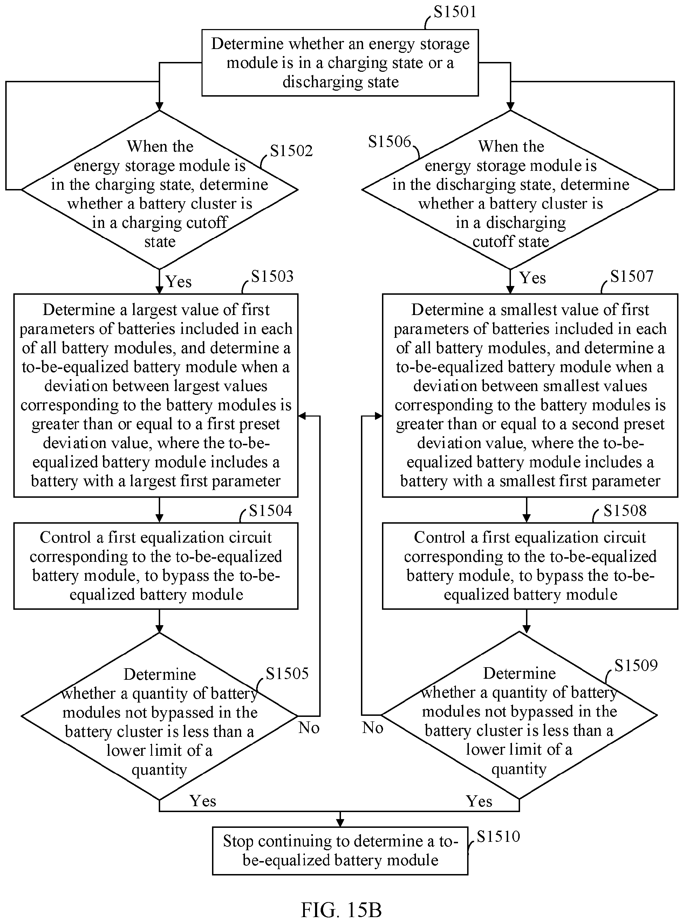

FIG. 15B is a flowchart of another control method for an energy storage system according to an embodiment of this application.

The control method shown in the figure shows a method for performing second-level equalization control, to be specific, a method, corresponding to S1401, for equalizing electricity quantities of battery modules in a same battery cluster. The method includes the following steps.

S1501: Determine whether an energy storage module is in a charging state or a discharging state.

S1502: When the energy storage module is in the charging state, determine whether a battery cluster is in a charging cutoff state.

When the battery cluster is in the charging cutoff state, it indicates that a battery cell in the battery cluster is almost fully charged. In this case, a battery voltage significantly changes.

In some embodiments, when a voltage of the battery cluster is greater than or equal to a first preset voltage threshold, it is determined that the battery cluster is in the charging cutoff state.

S1503: Determine a largest value of first parameters of batteries included in each of all battery modules, and determine a to-be-equalized battery module when a deviation between largest values corresponding to the battery modules is greater than or equal to a first preset deviation value, where the to-be-equalized battery module includes a battery with a largest first parameter.

The first parameter is a voltage or an SOC.

For example, the first parameter is a voltage. For n battery modules included in a battery cluster, a largest value of voltages of all batteries in a battery module $101a_{11}$ is obtained, and similarly, largest values respectively corresponding to battery modules $1101a_{12}$ to $101a_{1n}$ are obtained, that is, n largest values are obtained in total. When it is determined that a deviation between two of the n largest values is greater than or equal to the first preset deviation value, for example, a deviation between largest values of the battery module $1101a_{12}$ and the battery module $101a_{1n}$ is greater than or equal to the first preset deviation value, a battery module, in the battery cluster, to which a battery with a largest voltage belongs is determined as the to-be-equalized battery module.

S1504: Control a first equalization circuit corresponding to the to-be-equalized battery module, to bypass the to-be-equalized battery module.

In this case, the to-be-equalized battery module has a large electricity quantity. To equalize electricity quantities of the to-be-equalized battery module and another battery module, the to-be-equalized battery module is bypassed to stop charging.

In some embodiments, a plurality of to-be-equalized battery modules may be determined and bypassed.

In this case, a remaining battery module in the battery cluster continues to be charged.

S1505: Determine whether a quantity of battery modules not bypassed in the battery cluster is less than a lower limit of a quantity.

If the quantity of battery modules not bypassed does not reach the lower limit of a quantity of battery modules, S1503 is performed. If the quantity of battery modules not bypassed reaches the lower limit of a quantity of battery modules, S1510 is performed.

S1506: When the energy storage module is in the discharging state, determine whether a battery cluster is in a discharging cutoff state.

When the battery cluster is in the discharging cutoff state, it indicates that a battery cell in the battery cluster is almost fully discharged. In this case, a battery voltage significantly changes.

In some embodiments, when a voltage of the battery cluster is less than a second preset voltage threshold, it is determined that the battery cluster is in the charging cutoff state.

S1507: Determine a smallest value of first parameters of batteries included in each of all battery modules, and determine a to-be-equalized battery module when a deviation between smallest values corresponding to the battery modules is greater than or equal to a second preset deviation value, where the to-be-equalized battery module includes a battery with a smallest first parameter.

For example, the first parameter is still a voltage. For n battery modules included in a battery cluster, a smallest value of voltages of all batteries in a battery module $101an$ is obtained, and similarly, smallest values respectively corresponding to battery modules $1101a_{12}$ to $101a_{1n}$ are obtained, that is, n smallest values are obtained in total. When it is determined that a deviation between two of the n smallest values is greater than or equal to the second preset deviation value, for example, a deviation between smallest values of the battery module $1101a_{12}$ and the battery module $101a_{1n}$ is greater than or equal to the first preset deviation value, a battery module, in the battery cluster, to which a battery with a smallest voltage belongs is determined as the to-be-equalized battery module.

S1508: Control a first equalization circuit corresponding to the to-be-equalized battery module, to bypass the to-be-equalized battery module.

In this case, the to-be-equalized battery module has a small electricity quantity. To equalize electricity quantities of the to-be-equalized battery module and another battery module, the to-be-equalized battery module is bypassed to stop discharging.

In some embodiments, a plurality of to-be-equalized battery modules may be determined and bypassed.

In this case, a remaining battery module in the battery cluster continues to discharge.

S1509: Determine whether a quantity of battery modules not bypassed in the battery cluster is less than a lower limit of a quantity.

If the quantity of battery modules not bypassed does not reach the lower limit of a quantity of battery modules, S1507 is performed. If the quantity of battery modules not bypassed reaches the lower limit of a quantity of battery modules, S1510 is performed.

S1510: Stop continuing to determine a to-be-equalized battery module.

That is, in this case, the second-level equalization control ends.

The following describes an implementation of controlling bypassing of a battery module. Still refer to FIG. 5.

During bypassing of the battery module $101a_{11}$, S11 is first controlled to be turned off, and after first preset time, S12 is controlled to be turned on.

The first preset time is greater than dead time of S11, to avoid a direct short circuit between two ends of the battery module $101a_{11}$. Duration of the first preset time is not specifically limited in this embodiment of this application.

When the battery module bypassed in the foregoing steps needs to be reconnected to the battery cluster, the method further includes the following step:

controlling the first equalization circuit, so that the bypassed to-be-equalized battery module is reconnected to the battery cluster.

Specifically, when the battery module needs to be reconnected to the battery cluster, S12 is first turned off, and after second preset time, S11 is controlled to be turned on. The second preset time is greater than dead time of S12, to avoid a direct short circuit between the two ends of the battery module $101a_{11}$. Duration of the second preset time is not specifically limited in this embodiment of this application.

In some embodiments, specifications and models of S11 and S12 are the same, and the specified first preset time may be the same as the second preset time.

The following describes a control manner in a phased deployment scenario for a battery module.

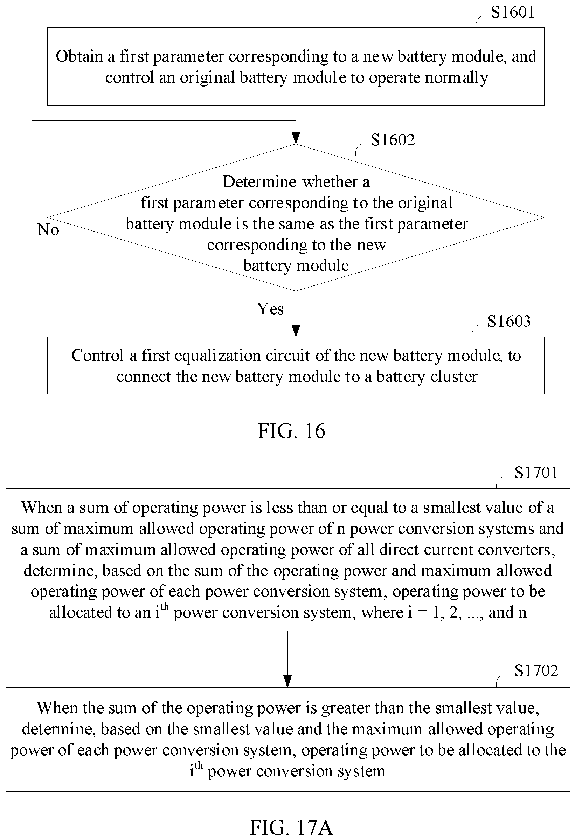

FIG. 16 is a flowchart of still another control method for an energy storage system according to an embodiment of this application.

The method includes the following steps.

S1601: Obtain a first parameter corresponding to a new battery module, and control an original battery module to operate normally.

The first parameter is a voltage or an SOC.

S1602: Determine whether a first parameter corresponding to the original battery module is the same as the first parameter corresponding to the new battery module.

If yes, S1603 is performed; otherwise, the original battery module continues to be controlled to operate normally.

S1603: Control a first equalization circuit of the new battery module, to connect the new battery module to a battery cluster.

To sum up, in the foregoing control method for an energy storage system, equalization performance of the energy storage system is improved, impact of bucket effect on the energy storage system is reduced, and a capacity of a new battery can be fully utilized. In addition, this facilitates flexible battery module-level phased deployment.

In some embodiments, when the battery cluster shown in FIG. 5 is used, operating power of all power conversion systems may be determined based on a power scheduling instruction and maximum allowed operating power of each power conversion system and each direct current converter. The power scheduling instruction indicates a sum of the operating power of all the power conversion systems. The following provides specific descriptions with reference to accompanying drawings.

FIG. 17A is a flowchart of yet another control method for an energy storage system according to an embodiment of this application.

The energy storage system includes n power conversion systems and m direct current converters, where n and m are integers greater than 1. The method includes the following steps.

S1701: When a sum of operating power is less than or equal to a smallest value of a sum of maximum allowed operating power of the n power conversion systems and a sum of maximum allowed operating power of all the direct current converters, determine, based on the sum of the operating power and maximum allowed operating power of each power conversion system, operating power to be allocated to an $i^{th}$ power conversion system, where i = 1, 2, ..., and n.

S1702: When the sum of the operating power is greater than the smallest value, determine, based on the smallest value and the maximum allowed operating power of each power conversion system, operating power to be allocated to the $i^{th}$ power conversion system.

In some embodiments, operating power of all the direct current converters may be determined based on a power scheduling instruction, maximum allowed operating power of each power conversion system and each direct current converter, and a third parameter corresponding to each battery cluster. The following provides specific descriptions with reference to accompanying drawings.

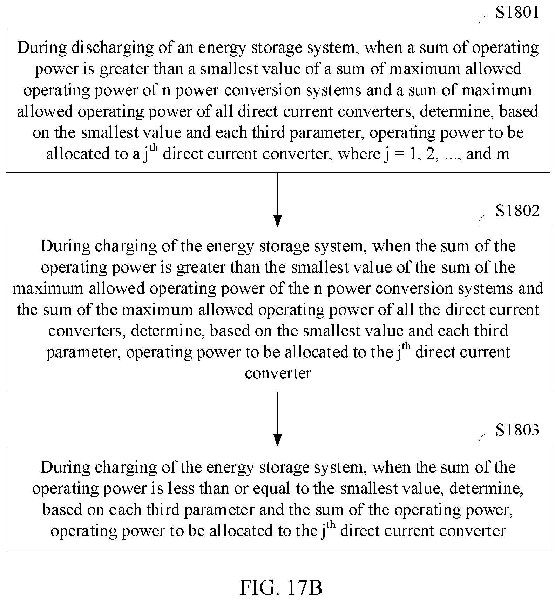

FIG. 17B is a flowchart of still yest another control method for an energy storage system according to an embodiment of this application.

The method includes the following steps.

S1801: During discharging of the energy storage system, when a sum of operating power is greater than a smallest value of a sum of maximum allowed operating power of n power conversion systems and a sum of maximum allowed operating power of all direct current converters, determine, based on the smallest value and each third parameter, operating power to be allocated to a $j^{th}$ direct current converter, where j = 1, 2, ..., and m.

S1802: During charging of the energy storage system, when the sum of the operating power is greater than the smallest value of the sum of the maximum allowed operating power of the n power conversion systems and the sum of the maximum allowed operating power of all the direct current converters, determine, based on the smallest value and each third parameter, operating power to be allocated to the $j^{th}$ direct current converter.

S1803: During charging of the energy storage system, when the sum of the operating power is less than or equal to the smallest value, determine, based on each third parameter and the sum of the operating power, operating power to be allocated to the $j^{th}$ direct current converter.

When the operating power to be allocated to the $j^{th}$ direct current converter is greater than maximum allowed operating power of the $j^{th}$ direct current converter, the maximum allowed operating power of the $j^{th}$ direct current converter is used as the operating power to be allocated to the $j^{th}$ direct current converter.

For specific implementations of the foregoing steps, refer to the formulas (1) to (8). Details are not described herein again in this embodiment of this application.

In some embodiments, the third parameter includes an SOH, an SOE, and a rated capacity.

In some other embodiments, the third parameter includes an SOC, an SOH, and a rated capacity.

The following describes a control manner in a phased deployment scenario for a battery cluster.

In this case, the foregoing method further includes the following step:
determining operating power of a direct current converter in a new direct current branch based on a third parameter corresponding to a battery cluster in the new direct current branch, maximum allowed operating power of the direct current converter in the new direct current branch, a power scheduling instruction, maximum allowed operating power of each original power conversion system and each original direct current converter, and a third parameter corresponding to each original battery cluster.

The energy storage system includes m battery clusters. In this case, an $(m+1)^{th}$ battery cluster added through phased deployment and a corresponding $(m+1)^{th}$ direct current converter are connected as a whole. Usually, a quantity of power conversion systems remains unchanged. Therefore, a power allocation manner for each power conversion system is similar to that described in the foregoing embodiment. For details, refer to the formulas (1) to (5).

For m+1 battery clusters, a battery management system 301 sends a third parameter $E_{m+1}$ of the added $(m+1)^{th}$ battery cluster together with information of an original battery cluster to an energy management system. A rule for allocating power by the energy management system to total m+1 direct current converters is similar to that described above, and only m in the original formulas (6) to (8) needs to be updated to m+1.

A sequence of the foregoing steps in this embodiment of this application is merely intended for ease of description, and does not constitute a limitation on this application. The sequence of the foregoing steps may be adjusted during implementation.

To sum up, in the foregoing control method, battery cluster-level electricity quantity equalization and flexible battery cluster-level phased deployment are implemented, to ensure high utilization of a battery cluster.

In some embodiments, when the battery cluster shown in FIG. 5 is used, operating power of all power conversion systems may be determined based on a power scheduling instruction and maximum allowed operating power of each power conversion system and each direct current branch. The power scheduling instruction indicates a sum of the operating power of all the power conversion systems. The following provides specific descriptions with reference to accompanying drawings.

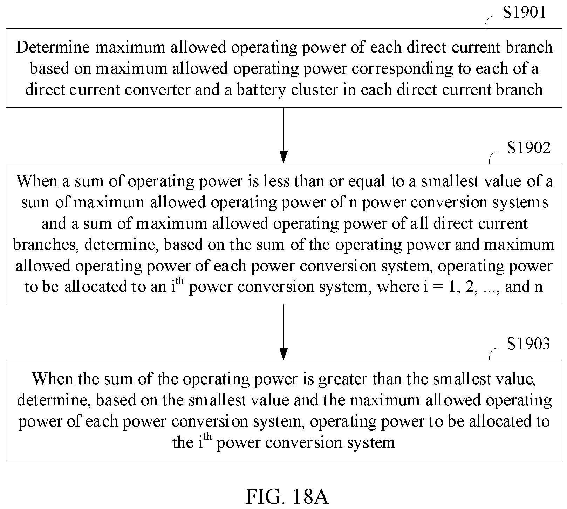

FIG. 18A is a flowchart of a further control method for an energy storage system according to an embodiment of this application.

The energy storage system includes n power conversion systems and m direct current branches, where n and m are integers greater than 1. The method is used to allocate operating power to each power conversion system. The method includes the following steps.

S1901: Determine maximum allowed operating power of each direct current branch based on maximum allowed operating power corresponding to each of a direct current converter and a battery cluster in each direct current branch.

S1902: When a sum of operating power is less than or equal to a smallest value of a sum of maximum allowed operating power of the n power conversion systems and a sum of maximum allowed operating power of all the direct current branches, determine, based on the sum of the operating power and maximum allowed operating power of each power conversion system, operating power to be allocated to an $i^{th}$ power conversion system, where i = 1, 2, ..., and n.

S1903: When the sum of the operating power is greater than the smallest value, determine, based on the smallest value and the maximum allowed operating power of each power conversion system, operating power to be allocated to the $i^{th}$ power conversion system.

In some embodiments, when the battery cluster shown in FIG. 5 is used, operating power of all the direct current branches may be determined based on a power scheduling instruction, maximum allowed operating power of each power conversion system and each direct current branch, and a third parameter corresponding to each battery cluster. The following provides specific descriptions with reference to accompanying drawings.

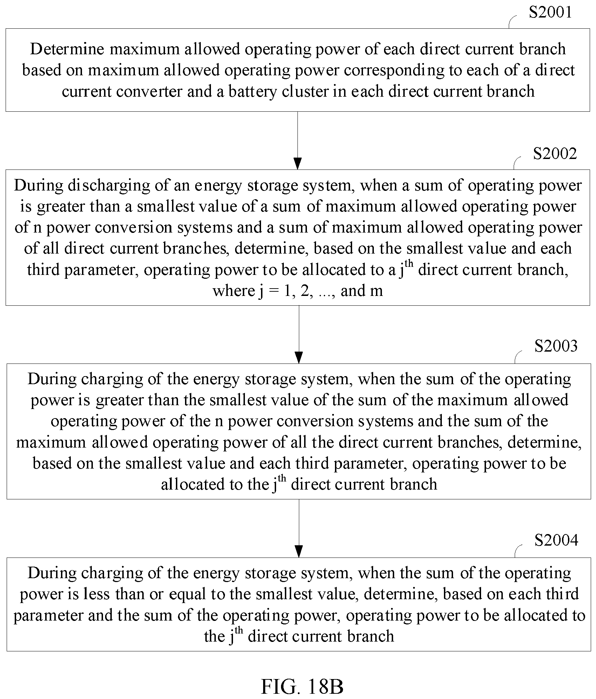

FIG. 18B is a flowchart of a still further control method for an energy storage system according to an embodiment of this application.

The method is used to allocate operating power to each direct current branch. The method includes the following steps.

S2001: Determine maximum allowed operating power of each direct current branch based on maximum allowed operating power corresponding to each of a direct current converter and a battery cluster in each direct current branch.

S2002: During discharging of the energy storage system, when a sum of operating power is greater than a smallest value of a sum of maximum allowed operating power of n power conversion systems and a sum of maximum allowed operating power of all direct current branches, determine, based on the smallest value and each third parameter, operating power to be allocated to a j' direct current branch, where j = 1, 2, ..., and m.

S2003: During charging of the energy storage system, when the sum of the operating power is greater than the smallest value of the sum of the maximum allowed operating power of the n power conversion systems and the sum of the maximum allowed operating power of all the direct current branches, determine, based on the smallest value and each third parameter, operating power to be allocated to the $j^{th}$ direct current branch.

S2004: During charging of the energy storage system, when the sum of the operating power is less than or equal to the smallest value, determine, based on each third parameter and the sum of the operating power, operating power to be allocated to the $j^{th}$ direct current branch.

When the operating power to be allocated to the $j^{th}$ direct current branch is greater than maximum allowed operating power of the $j^{th}$ direct current branch, the maximum allowed operating power of the $j^{th}$ direct current branch is used as the operating power to be allocated to the $j^{th}$ direct current branch.

For specific implementations of the foregoing steps, refer to the formulas (9) to (16). Details are not described herein again in this embodiment of this application.

In some embodiments, the third parameter includes an SOH, an SOE, and a rated capacity.

In some other embodiments, the third parameter includes an SOC, an SOH, and a rated capacity.

The following describes a control manner in a phased deployment scenario for a battery cluster.

In this case, the foregoing method further includes the following step:

determining operating power of a direct current branch in a new direct current branch based on a third parameter corresponding to a battery cluster in the new direct current branch, maximum allowed operating power of the new direct current branch, a power scheduling instruction, maximum allowed operating power of each original power conversion system and each original direct current branch, and a third parameter corresponding to each original battery cluster.

The energy storage system includes m battery clusters. In this case, an $(m+1)^{th}$ battery cluster added through phased deployment and a corresponding $(m+1)^{th}$ direct current converter are connected as a whole. Usually, a quantity of power conversion systems remains unchanged. Therefore, a power allocation manner for each power conversion system is similar to that described in the foregoing embodiment. For details, refer to the formulas (9) to (13).

For m+1 battery clusters, a battery management system 301 sends a third parameter $E_{m+1}$ of the added $(m+1)^{th}$ battery cluster together with information of an original battery cluster to an energy management system. A rule for allocating power by the energy management system to total m+1 direct current branches is similar to that described above, and only m in the original formulas (14) to (16) needs to be updated to m+1.

A sequence of the foregoing steps in this embodiment of this application is merely intended for ease of description, and does not constitute a limitation on this application. The sequence of the foregoing steps may be adjusted during implementation.

To sum up, in the foregoing control method, battery cluster-level electricity quantity equalization and flexible battery cluster-level phased deployment are implemented, to ensure high utilization of a battery cluster.

The following describes a control method for equalizing electricity quantities of batteries in battery modules.

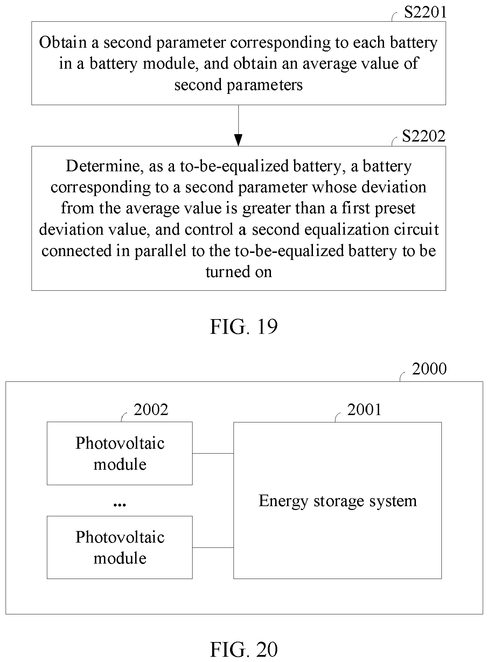

FIG. 19 is a flowchart of a yet further control method for an energy storage system according to an embodiment of this application.

Each battery is connected in parallel to a second equalization circuit, and each second equalization circuit includes a third controllable switch and a resistor that are connected in series. The second equalization circuit is turned on when the third controllable switch is turned on, to consume an electricity quantity of the battery through the resistor.

The method includes the following steps.

S2201: Obtain a second parameter corresponding to each battery in a battery module, and obtain an average value of second parameters.

S2202: Determine, as a to-be-equalized battery, a battery corresponding to a second parameter whose deviation from the average value is greater than a first preset deviation value, and control a second equalization circuit connected in parallel to the to-be-equalized battery to be turned on.

After the second equalization circuit is turned on, the second equalization circuit releases a capacity through a resistor, to equalize electricity quantities of batteries in the battery module.

The second parameter is a voltage or a state of charge.

To sum up, in the foregoing control method, electricity quantities of batteries in each battery module are equalized, to reduce impact of bucket effect of the batteries on the energy storage system, so that a battery capacity can be fully utilized.

Based on the energy storage system provided in the foregoing embodiments, an embodiment of this application further provides a photovoltaic power generation system. The following provides specific description with reference to accompanying drawings.

FIG. 20 is a schematic diagram of a photovoltaic power generation system according to an embodiment of this application.

The photovoltaic power generation system 2000 shown in the figure includes an energy storage system 2001 and a plurality of photovoltaic modules 2002.

The photovoltaic module 2002 is configured to convert light energy into electric energy, and transmit the electric energy to the energy storage system 2001. A quantity of photovoltaic modules 2002 is not specifically limited in this embodiment of this application.

The energy storage system 2001 is configured to store electric energy produced by the photovoltaic module. During charging of the energy storage system, a battery may be charged by using electric energy of a power grid or electric energy produced by the photovoltaic module. During discharging of the energy storage system, the battery discharges to the power grid.

The energy storage system includes a battery cluster, a direct current converter, a controller, and at least one power conversion system. One battery cluster is connected to one direct current converter to form a direct current branch. The direct current converter is configured to perform direct current conversion on a direct current provided by the battery cluster. The energy storage system includes at least one direct current branch. The at least one power conversion system is configured to perform power conversion on direct currents provided by all direct current branches. A quantity of power conversion systems may be the same as or different from a quantity of direct current converters. Each battery cluster includes at least two energy storage modules that are connected in series. Each energy storage module includes a first equalization circuit and a battery module. Each battery module includes at least two batteries. The batteries in the battery module may be connected in series; or the batteries may be first connected in series to form battery strings, and then the battery strings are connected in parallel. The controller is configured to: control the first equalization circuit, to balance electricity quantities of battery modules in the battery cluster, and determine operating power to be allocated to each power conversion system and each direct current converter.

For a specific implementation and an operating principle of the energy storage system 2001, refer to the descriptions in the foregoing embodiments. Details are not described again.

To sum up, in the energy storage system of the photovoltaic power generation system, battery clusters are not directly connected in parallel, each battery cluster is located in one direct current branch, and each battery cluster is connected to one direct current converter. Therefore, independent operation of the battery clusters is implemented. First equalization circuits in the battery cluster are configured to equalize electricity quantities of battery modules. This improves equalization performance between battery modules. Electricity quantities can be further equalized during battery module-level phased deployment and spare part replacement. In addition, operating power is allocated to the power conversion system and the direct current converter, so that each cluster is independently managed, and flexible battery cluster-level phased deployment can be further performed. Therefore, in the energy storage system, equalization performance of the energy storage system is improved, impact of bucket effect on the energy storage system is reduced, and a battery capacity can be fully utilized. In addition, this facilitates flexible battery module-level and battery cluster-level phased deployment.

It should be understood that, in this application, "at least one (item)" means one or more, and "a plurality of" means two or more. The term "and/or" describes an association relationship between associated objects, and indicates that three relationships may exist. For example, "A and/or B" may indicate the following three cases: Only A exists, only B exists, and both A and B exist, where A and B may be singular or plural. The character "/" usually indicates an "or" relationship between the associated objects. "At least one of the following items" or a similar expression thereof indicates any combination of the items, including any combination of one or more of the items. For example, at least one of a, b, or c may indicate a, b, c, "a and b", "a and c", "b and c", or "a, b, and c", where a, b, and c may be singular or plural.

The foregoing embodiments are merely intended to describe the technical solutions of this application, but not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

**Claims**

1. An energy storage system, wherein the energy storage system comprises a battery cluster, a direct current converter, a controller, and at least one power conversion system;

   the energy storage system comprises at least one direct current branch, and each of the at least one direct current branch comprises a battery cluster and a direct current converter that are connected to each other;
   the at least one power conversion system is configured to perform power conversion on a direct current provided by the at least one direct current branch;
   each battery cluster comprises at least two energy storage modules that are connected in series, each of the at least two energy storage modules comprises a battery module, all or some of the at least two energy storage modules comprise a first equalization circuit, and each battery module comprises at least two batteries; and
   the controller is configured to: control the first equalization circuit, to balance electricity quantities of battery modules in the battery cluster, and allocate operating power to the power conversion system and the direct current converter.

2. The energy storage system according to claim 1, wherein an output end of the battery cluster comprised in each direct current branch is connected to an input end of the direct current converter comprised in the direct current branch; and
the direct current converter is configured to perform direct current conversion on a direct current provided by the battery cluster.

3. The energy storage system according to claim 2, wherein the controller is specifically configured to determine operating power of all power conversion systems based on a power scheduling instruction and maximum allowed operating power of each power conversion system and each direct current converter, wherein the power scheduling instruction indicates a sum of the operating power of all the power conversion systems.

4. The energy storage system according to claim 3, wherein the energy storage system comprises n power conversion systems and m direct current converters, and n and m are integers greater than 1;

the controller is specifically configured to: when the sum of the operating power is less than or equal to a smallest value of a sum of maximum allowed operating power of the n power conversion systems and a sum of maximum allowed operating power of all the direct current converters, determine, based on the sum of the operating power and maximum allowed operating power of each power conversion system, operating power to be allocated to an $i^{th}$ power conversion system, wherein $i = 1, 2, ...,$ and n; and
the controller is further specifically configured to: when the sum of the operating power is greater than the smallest value, determine, based on the smallest value and the maximum allowed operating power of each power conversion system, operating power to be allocated to the $i^{th}$ power conversion system.

5. The energy storage system according to claim 2, wherein the controller is specifically configured to determine operating power of all direct current converters based on a power scheduling instruction, maximum allowed operating power of each power conversion system and each direct current converter, and a third parameter corresponding to each battery cluster, wherein the power scheduling instruction indicates a sum of operating power of all power conversion systems.

6. The energy storage system according to claim 5, wherein the energy storage system comprises n power conversion systems and m direct current converters, and n and m are integers greater than 1; and
the controller is specifically configured to: during discharging of the energy storage system, when the sum of the operating power is greater than a smallest value of a sum of maximum allowed operating power of the n power conversion systems and a sum of maximum allowed operating power of all the direct current converters, determine, based on the smallest value and each third parameter, operating power to be allocated to a $j^{th}$ direct current converter, wherein $j = 1, 2, ...,$ and m.

7. The energy storage system according to claim 6, wherein the controller is further specifically configured to: during charging of the energy storage system, when the sum of the operating power is greater than the smallest value of the sum of the maximum allowed operating power of the n power conversion systems and the sum of the maximum allowed operating power of all the direct current converters, determine, based on the smallest value and each third parameter, operating power to be allocated to the $j^{th}$ direct current converter; or when the sum of the operating power is less than or equal to the smallest value, determine, based on each third parameter and the sum of the operating power, operating power to be allocated to the $j^{th}$ converter.

8. The energy storage system according to claim 6 or 7, wherein the controller is further configured to: when the operating power to be allocated to the $j^{th}$ direct current converter is greater than maximum allowed operating power of the $j^{th}$ direct current converter, use the maximum allowed operating power of the $j^{th}$ direct current converter as the operating power to be allocated to the $j^{th}$ direct current converter.

9. The energy storage system according to claim 5, wherein when a new direct current branch is connected to the energy storage system, the controller is further configured to determine operating power of a direct current converter in the new direct current branch based on a third parameter corresponding to a battery cluster in the new direct current branch, maximum allowed operating power of the direct current converter in the new direct current branch, the power scheduling instruction, maximum allowed operating power of each original power conversion system and each original direct current converter, and a third parameter corresponding to each original battery cluster.

10. The energy storage system according to claim 1, wherein the energy storage system further comprises a direct current bus, and the battery cluster and the direct current converter that are comprised in each direct current branch are connected in series and then connected to the direct current bus;

the direct current converter is configured to compensate for a difference between an output voltage of the battery cluster and a voltage of the direct current bus; and

the controller is further configured to control an operating status of the direct current converter.

11. The energy storage system according to claim 10, wherein the battery cluster comprised in the direct current branch supplies power to the direct current converter comprised in the direct current branch; or

the direct current converter comprised in the direct current branch obtains power from the direct current bus; or when a voltage of the battery cluster comprised in the direct current branch is higher than or equal to the voltage of the direct current bus, the battery cluster comprised in the direct current branch supplies power to the direct current converter comprised in the direct current branch; or when a voltage of the battery cluster comprised in the direct current branch is lower than the voltage of the direct current bus, the direct current converter comprised in the direct current branch obtains power from the direct current bus.

12. The energy storage system according to claim 10, wherein the controller is specifically configured to determine operating power of all power conversion systems based on a power scheduling instruction and maximum allowed operating power of each power conversion system and each direct current branch, wherein the power scheduling instruction indicates a sum of the operating power of all the power conversion systems.

13. The energy storage system according to claim 12, wherein the controller is specifically configured to determine maximum allowed operating power of each direct current branch based on maximum allowed operating power corresponding to each of the direct current converter and the battery cluster in each direct current branch.

14. The energy storage system according to claim 12 or 13, wherein the energy storage system comprises n power conversion systems and m direct current branches, and n and m are integers greater than 1;

the controller is specifically configured to: when the sum of the operating power is less than or equal to a smallest value of a sum of maximum allowed operating power of the n power conversion systems and a sum of maximum allowed operating power of all the direct current branches, determine, based on the sum of the operating power and maximum allowed operating power of each power conversion system, operating power to be allocated to an $i^{th}$ power conversion system, wherein i = 1, 2, ..., and n; and the controller is further specifically configured to: when the sum of the operating power is greater than the smallest value, determine, based on the smallest value and the maximum allowed operating power of each power conversion system, operating power to be allocated to the $i^{th}$ power conversion system.

15. The energy storage system according to claim 12 or 13, wherein the controller is further configured to determine operating power of all direct current branches based on a power scheduling instruction, maximum allowed operating power of each power conversion system and each direct current branch, and a third parameter corresponding to each battery cluster, wherein the power scheduling instruction indicates the sum of the operating power of all the power conversion systems.

16. The energy storage system according to claim 15, wherein the energy storage system comprises n power conversion systems and m direct current branches, and n and m are integers greater than 1; and the controller is specifically configured to: during discharging of the energy storage system, when the sum of the operating power is greater than a smallest value of a sum of maximum allowed operating power of the n power conversion systems and a sum of maximum allowed operating power of all the direct current branches, determine, based on the smallest value and each third parameter, operating power to be allocated to a $j^{th}$ direct current branch, wherein j = 1, 2, ..., and m.

17. The energy storage system according to claim 16, wherein the controller is further specifically configured to: during charging of the energy storage system, when the sum of the operating power is greater than the smallest value of the sum of the maximum allowed operating power of the n power conversion systems and the sum of the maximum allowed operating power of all the direct current branches, determine, based on the smallest value and each third parameter, operating power to be allocated to the $j^{th}$ direct current branch; or when the sum of the operating power is less than or equal to the smallest value, determine, based on each third parameter and the sum of the operating power, operating power to be allocated to the $j^{th}$ direct current branch.

18. The energy storage system according to claim 16 or 17, wherein the controller is further configured to: when the operating power to be allocated to the j<sup>th</sup> direct current branch is greater than maximum allowed operating power of the j<sup>th</sup> direct current branch, use the maximum allowed operating power of the j<sup>th</sup> direct current branch as the operating power to be allocated to the j<sup>th</sup> direct current branch.

19. The energy storage system according to claim 15, wherein when a new direct current branch is connected to the energy storage system, the controller is further configured to determine operating power of a direct current branch in the new direct current branch based on a third parameter corresponding to a battery cluster in the new direct current branch, maximum allowed operating power of the direct current branch in the new direct current branch, the power scheduling instruction, maximum allowed operating power of each original power conversion system and each original direct current branch, and a third parameter corresponding to each original battery cluster.

20. The energy storage system according to any one of claims 5 to 9 or claims 15 to 19, wherein the third parameter comprises a state of health SOH, a state of energy SOE, and a rated capacity Q.

21. The energy storage system according to any one of claims 5 to 9 or claims 15 to 19, wherein the third parameter comprises a state of charge SOC, a state of health SOH, and a rated capacity Q.

22. The energy storage system according to claim 1, wherein the first equalization circuit comprises a first controllable switch and a second controllable switch; and
a positive output end of the battery module is connected to a first end of the first controllable switch, a second end of the first controllable switch is connected to a first end of the second controllable switch, a second end of the second controllable switch is connected to a negative output end of the battery module, the second end of the first controllable switch is a positive output end of the energy storage module, and the negative output end of the battery module is a negative output end of the energy storage module.

23. The energy storage system according to claim 22, wherein when the energy storage module is in a charging state, the controller is specifically configured to: when determining that the battery cluster is in a charging cutoff state, determine a to-be-equalized battery module based on first parameters corresponding to all batteries in the battery cluster, and then control a first equalization circuit corresponding to the to-be-equalized battery module, to bypass the to-be-equalized battery module.

24. The energy storage system according to claim 23, wherein the controller is specifically configured to: determine a largest value of first parameters of batteries comprised in each of all battery modules; determine a to-be-equalized battery module when a first parameter deviation between largest values corresponding to the battery modules is greater than or equal to a first preset deviation value, wherein the to-be-equalized battery module comprises a battery with a largest first parameter; and then, first control both the first controllable switch and the second controllable switch to be turned off, and after first preset time, control the second controllable switch to be turned on.

25. The energy storage system according to claim 22, wherein when the energy storage module is in a discharging state, the controller is specifically configured to: when determining that the battery cluster is in a discharging cutoff state, determine a to-be-equalized battery module based on first parameters corresponding to all batteries in the battery cluster, and then control a first equalization circuit corresponding to the to-be-equalized battery module, to bypass the to-be-equalized battery module.

26. The energy storage system according to claim 25, wherein the controller is specifically configured to: determine a smallest value of first parameters of batteries comprised in all battery modules; determine a to-be-equalized battery module when a first parameter deviation between smallest values corresponding to the battery modules is greater than or equal to a second preset deviation value, wherein the to-be-equalized battery module comprises a battery with a smallest first parameter; and then, first control both the first controllable switch and the second controllable switch to be turned off, and after first preset time, control the second controllable switch to be turned on.

27. The energy storage system according to any one of claims 23 to 26, wherein the controller is further configured to: first control both the first controllable switch and the second controllable switch to be turned off, and after second preset time, control the first controllable switch to be turned on, so that the bypassed to-be-equalized battery module is reconnected to the battery cluster.

28. The energy storage system according to any one of claims 23 to 26, wherein when a new battery module is connected to the battery cluster, the controller is further configured to: first control a first controllable switch of the new battery module to be turned off, and control a second controllable switch of the new battery module to be turned on; and when a first parameter corresponding to an original battery module is the same as a first parameter corresponding to the new battery module, control the second controllable switch to be turned off, and after second preset time, control the first controllable switch to be turned on.

29. The energy storage system according to claim 1, wherein the first equalization circuit comprises a direct current/direct current conversion circuit;

an input end of the direct current/direct current conversion circuit is connected to an output end of the battery module, and an output end of the direct current/direct current conversion circuit is connected to an output end of the energy storage module; and
the direct current/direct current conversion circuit is configured to boost or reduce an output voltage of the energy storage module correspondingly connected to the direct current/direct current conversion circuit.

30. The energy storage system according to claim 29, wherein when the energy storage module is in a charging state, the controller is specifically configured to: when determining that the battery cluster is in a charging cutoff state, determine a to-be-equalized battery module based on first parameters corresponding to all batteries in the battery cluster, and then control a first equalization circuit corresponding to the to-be-equalized battery module, to bypass the to-be-equalized battery module.

31. The energy storage system according to claim 29, wherein the controller is further configured to control, according to an efficiency instruction, an operating status of a first equalization circuit corresponding to the efficiency instruction, so as to control an output voltage of an energy storage module corresponding to the efficiency instruction, wherein the efficiency instruction indicates optimal efficiency of a selected battery cluster or energy storage module in the energy storage system.

32. The energy storage system according to claim 29, wherein the controller is further configured to control each first equalization circuit, or control a direct current converter connected to each battery cluster, or control both each first equalization circuit and a direct current converter connected to each battery cluster, to adjust an output voltage of each battery cluster, so as to equalize output of battery clusters.

33. The energy storage system according to claim 30, wherein the controller is specifically configured to: determine a largest value of first parameters of batteries comprised in each of all battery modules; and determine a to-be-equalized battery module when a first parameter deviation between largest values corresponding to the battery modules is greater than or equal to a first preset deviation value, wherein the to-be-equalized battery module comprises a battery with a largest first parameter.

34. The energy storage system according to claim 29, wherein when the energy storage module is in a discharging state, the controller is specifically configured to: when determining that the battery cluster is in a discharging cutoff state, determine a to-be-equalized battery module based on first parameters corresponding to all batteries in the battery cluster, and then control a first equalization circuit corresponding to the to-be-equalized battery module, to bypass the to-be-equalized battery module.

35. The energy storage system according to claim 33, wherein the controller is specifically configured to: determine a smallest value of first parameters of batteries comprised in all battery modules; and determine a to-be-equalized battery module when a first parameter deviation between smallest values corresponding to the battery modules is greater than or equal to a second preset deviation value, wherein the to-be-equalized battery module comprises a battery with a smallest first parameter.

36. The energy storage system according to any one of claims 30 to 35, wherein the controller is further configured to control the first equalization circuit, so that the bypassed to-be-equalized battery module is reconnected to the battery cluster.

37. The energy storage system according to any one of claims 23 to 26 or claims 30 to 36, wherein the controller is further configured to: when a quantity of battery modules not bypassed in the battery cluster is less than a lower limit of a quantity, stop continuing to determine a to-be-equalized battery module.

38. The energy storage system according to any one of claims 30 to 35, wherein when a new energy storage module is connected to the battery cluster, the controller is further configured to: first control a first equalization circuit of the new energy storage module, to bypass a battery module of the new energy storage module; and when a first parameter corresponding to an original battery module is the same as a first parameter of the battery module of the new energy storage module, control the first equalization circuit of the new energy storage module, to connect the battery module of the new energy storage module to the battery cluster.

39. The energy storage system according to any one of claims 23 to 38, wherein the first parameter is a voltage or a state of charge SOC.

40. The energy storage system according to claim 1, wherein the first equalization circuit is integrated in the battery module.

41. The energy storage system according to claim 1, wherein each battery is connected in parallel to a second equalization circuit, and each second equalization circuit comprises a third controllable switch and a resistor that are connected in series;

    the second equalization circuit is turned on when the third controllable switch is turned on; and
    the controller is further configured to: obtain a second parameter corresponding to each battery in the battery module, obtain an average value of second parameters, determine, as a to-be-equalized battery, a battery corresponding to a second parameter whose deviation from the average value is greater than a first preset deviation value, and control a second equalization circuit connected in parallel to the to-be-equalized battery to be turned on.

42. The energy storage system according to claim 41, wherein the second parameter is a voltage of the battery, or a state of charge SOC of the battery.

43. The energy storage system according to claim 1, wherein the power conversion system is a direct current/alternating current converter.

44. A control method for an energy storage system, wherein the energy storage system comprises a battery cluster, a direct current converter, and at least one power conversion system, the energy storage system comprises at least one direct current branch, each of the at least one direct current branch comprises a battery cluster and a direct current converter that are connected to each other, each battery cluster comprises at least two energy storage modules that are connected in series, each of the at least two energy storage modules comprises a battery module, all or some of the at least two energy storage modules comprise a first equalization circuit, and the method comprises:

    controlling the first equalization circuit, to balance electricity quantities of battery modules in the battery cluster; and
    allocating operating power to all power conversion systems, and allocating operating power to all direct current converters.

45. The control method for an energy storage system according to claim 44, wherein the battery cluster and the direct current converter that are comprised in each direct current branch are connected in parallel, the direct current converter is configured to perform direct current conversion on a direct current provided by the battery cluster, and the allocating operating power to all power conversion systems specifically comprises:
determining operating power of all the power conversion systems based on a power scheduling instruction and maximum allowed operating power of each power conversion system and each direct current converter, wherein the power scheduling instruction indicates a sum of the operating power of all the power conversion systems.

46. The control method for an energy storage system according to claim 45, wherein the energy storage system comprises n power conversion systems and m direct current converters, n and m are integers greater than 1, and the determining operating power of all the power conversion systems based on a power scheduling instruction and maximum allowed operating power of each power conversion system and each direct current converter specifically comprises:

    when the sum of the operating power is less than or equal to a smallest value of a sum of maximum allowed operating power of the n power conversion systems and a sum of maximum allowed operating power of all the direct current converters, determining, based on the sum of the operating power and maximum allowed operating power of each power conversion system, operating power to be allocated to an i<sup>th</sup> power conversion system, wherein i = 1, 2, ..., and n; or

when the sum of the operating power is greater than the smallest value, determining, based on the smallest value and the maximum allowed operating power of each power conversion system, operating power to be allocated to the i<sup>th</sup> power conversion system.

47. The control method for an energy storage system according to claim 44, wherein the battery cluster and the direct current converter that are comprised in each direct current branch are connected in parallel, the direct current converter is configured to perform direct current conversion on a direct current provided by the battery cluster, and the allocating operating power to the direct current converter specifically comprises:
determining operating power of all the direct current converters based on a power scheduling instruction, maximum allowed operating power of each power conversion system and each direct current converter, and a third parameter corresponding to each battery cluster, wherein the power scheduling instruction indicates a sum of the operating power of all the power conversion systems.

48. The control method for an energy storage system according to claim 47, wherein the energy storage system comprises n power conversion systems and m direct current converters, n and m are integers greater than 1, and during discharging of the energy storage system, the determining operating power of all the direct current converters based on a power scheduling instruction, maximum allowed operating power of each power conversion system and each direct current converter, and a third parameter corresponding to each battery cluster specifically comprises:
when the sum of the operating power is greater than a smallest value of a sum of maximum allowed operating power of the n power conversion systems and a sum of maximum allowed operating power of all the direct current converters, determining, based on the smallest value and each third parameter, operating power to be allocated to a j<sup>th</sup> direct current converter, wherein j = 1, 2, ..., and m.

49. The control method for an energy storage system according to claim 48, wherein the energy storage system comprises n power conversion systems and m direct current converters, n and m are integers greater than 1, and during charging of the energy storage system, the determining operating power of all the direct current converters based on a power scheduling instruction, maximum allowed operating power of each power conversion system and each direct current converter, and a third parameter corresponding to each battery cluster specifically comprises:

when the sum of the operating power is greater than the smallest value of the sum of the maximum allowed operating power of the n power conversion systems and the sum of the maximum allowed operating power of all the direct current converters, determining, based on the smallest value and each third parameter, operating power to be allocated to the j<sup>th</sup> direct current converter; or
when the sum of the operating power is less than or equal to the smallest value, determining, based on each third parameter and the sum of the operating power, operating power to be allocated to a j<sup>th</sup> direct current converter.

50. The control method for an energy storage system according to claim 48, wherein when a new direct current branch is connected to the energy storage system, the method further comprises:
determining operating power of a direct current converter in the new direct current branch based on a third parameter corresponding to a battery cluster in the new direct current branch, maximum allowed operating power of the direct current converter in the new direct current branch, the power scheduling instruction, maximum allowed operating power of each original power conversion system and each original direct current converter, and a third parameter corresponding to each original battery cluster.

51. The control method for an energy storage system according to claim 44, wherein the energy storage system further comprises a direct current bus, the battery cluster and the direct current converter that are comprised in each direct current branch are connected in series and then connected to the direct current bus, the direct current converter is configured to compensate for a difference between an output voltage of the battery cluster and a voltage of the direct current bus, and the allocating operating power to all power conversion systems specifically comprises:
determining operating power of all the power conversion systems based on a power scheduling instruction and maximum allowed operating power of each power conversion system and each direct current branch, wherein the power scheduling instruction indicates a sum of the operating power of all the power conversion systems.

52. The control method for an energy storage system according to claim 51, wherein the method further comprises:
determining maximum allowed operating power of each direct current branch based on maximum allowed operating power corresponding to each of the direct current converter and the battery cluster in each direct current branch.

53. The control method of an energy storage system according to claim 51 or 52, wherein the energy storage system comprises n power conversion systems and m direct current branches, n and m are integers greater than 1, and the determining operating power of all the power conversion systems based on a power scheduling instruction and maximum allowed operating power of each power conversion system and each direct current branch specifically comprises:

when the sum of the operating power is less than or equal to a smallest value of a sum of maximum allowed operating power of the n power conversion systems and a sum of maximum allowed operating power of all the direct current branches, determining, based on the sum of the operating power and maximum allowed operating power of each power conversion system, operating power to be allocated to an $i^{th}$ power conversion system, wherein i = 1, 2, ..., and n; or
when the sum of the operating power is greater than the smallest value, determining, based on the smallest value and the maximum allowed operating power of each power conversion system, operating power to be allocated to the $i^{th}$ power conversion system.

54. The control method for an energy storage system according to claim 51 or 52, wherein the method further comprises and specifically comprises:
determining operating power of all direct current branches based on a power scheduling instruction, maximum allowed operating power of each power conversion system and each direct current branch, and a third parameter corresponding to each battery cluster, wherein the power scheduling instruction indicates the sum of the operating power of all the power conversion systems.

55. The control method for an energy storage system according to claim 54, wherein the energy storage system comprises n power conversion systems and m direct current branches, n and m are integers greater than 1, and during discharging of the energy storage system, the determining operating power of all direct current branches based on a power scheduling instruction, maximum allowed operating power of each power conversion system and each direct current branch, and a third parameter corresponding to each battery cluster specifically comprises:
when the sum of the operating power is greater than a smallest value of a sum of maximum allowed operating power of the n power conversion systems and a sum of maximum allowed operating power of all the direct current branches, determining, based on the smallest value and each third parameter, operating power to be allocated to a $j^{th}$ direct current branch, wherein j = 1, 2, ..., and m.

56. The control method for an energy storage system according to claim 55, wherein during charging of the energy storage system, the determining operating power of all direct current branches based on a power scheduling instruction, maximum allowed operating power of each power conversion system and each direct current branch, and a third parameter corresponding to each battery cluster specifically comprises:

when the sum of the operating power is greater than the smallest value of the sum of the maximum allowed operating power of the n power conversion systems and the sum of the maximum allowed operating power of all the direct current branches, determining, based on the smallest value and each third parameter, operating power to be allocated to the $j^{th}$ direct current branch; or
when the sum of the operating power is less than or equal to the smallest value, determining, based on each third parameter and the sum of the operating power, operating power to be allocated to the $j^{th}$ direct current branch.

57. The control method for an energy storage system according to claim 55 or 56, wherein the method further comprises:
when the operating power to be allocated to the $j^{th}$ direct current branch is greater than maximum allowed operating power of the $j^{th}$ direct current branch, using the maximum allowed operating power of the $j^{th}$ direct current branch as the operating power to be allocated to the $j^{th}$ direct current branch.

58. The control method for an energy storage system according to claim 54, wherein when a new direct current branch is connected to the energy storage system, the method further comprises:
determining operating power of a direct current branch in the new direct current branch based on a third parameter corresponding to a battery cluster in the new direct current branch, maximum allowed operating power of the direct current branch in the new direct current branch, the power scheduling instruction, maximum allowed operating power of each original power conversion system and each original direct current branch, and a third parameter corresponding to each original battery cluster.

**59.** The control method for an energy storage system according to claim 44, wherein the first equalization circuit comprises a direct current/direct current conversion circuit, the direct current/direct current conversion circuit is configured to boost or reduce an output voltage of the energy storage module correspondingly connected to the direct current/direct current conversion circuit, and the method further comprises:
controlling, according to an efficiency instruction, an operating status of a first equalization circuit corresponding to the efficiency instruction, so as to control an output voltage of an energy storage module corresponding to the efficiency instruction, wherein the efficiency instruction indicates optimal efficiency of a selected battery cluster or energy storage module in the energy storage system.

**60.** The control method for an energy storage system according to claim 44, wherein when the energy storage module is in a charging state, the controlling the first equalization circuit, to balance electricity quantities of battery modules in the battery cluster specifically comprises:

when it is determined that the battery cluster is in a charging cutoff state, determining a largest value of first parameters of batteries comprised in each of all battery modules;
determining a to-be-equalized battery module when a deviation between largest values corresponding to the battery modules is greater than or equal to a first preset deviation value, wherein the to-be-equalized battery module comprises a battery with a largest first parameter; and
controlling a first equalization circuit corresponding to the to-be-equalized battery module, to bypass the to-be-equalized battery module.

**61.** The control method for an energy storage system according to claim 44, wherein when the energy storage module is in a discharging state, the controlling the first equalization circuit, to balance electricity quantities of battery modules in the battery cluster specifically comprises:

when it is determined that the battery cluster is in a discharging cutoff state, determining a smallest value of first parameters of batteries comprised in all battery modules;
determining a to-be-equalized battery module when a deviation between smallest values corresponding to the battery modules is greater than or equal to a second preset deviation value, wherein the to-be-equalized battery module comprises a battery with a smallest first parameter; and
controlling a first equalization circuit corresponding to the to-be-equalized battery module, to bypass the to-be-equalized battery module.

**62.** The control method for an energy storage system according to claim 60 or 61, wherein when a new battery module is connected to the battery cluster, the method further comprises:
when a first parameter corresponding to an original battery module is the same as a first parameter corresponding to the new battery module, controlling a first equalization circuit of the new battery module, to connect the new battery module to the battery cluster.

**63.** The control method for an energy storage system according to claim 44, wherein the method further comprises:
obtaining a second parameter corresponding to each battery in the battery module, obtaining an average value of second parameters, determining, as a to-be-equalized battery, a battery corresponding to a second parameter whose deviation from the average value is greater than a third preset deviation value, and controlling a second equalization circuit connected in parallel to the to-be-equalized battery to be turned on, wherein the second equalization circuit is configured to release a capacity of the battery when the second equalization circuit is turned on.

**64.** A photovoltaic power generation system, wherein the photovoltaic power generation system comprises the energy storage system according to any one of claims 1 to 43, and further comprises a plurality of photovoltaic modules; and
the plurality of photovoltaic modules are configured to convert light energy into electric energy, and then transmit the electric energy to the energy storage system.

FIG. 1

FIG. 2

FIG. 3

FIG. 4

FIG. 5

FIG. 6

FIG. 7A

FIG. 7B

FIG. 8A

FIG. 8B

FIG. 9A

FIG. 9B

FIG. 10

FIG.11

FIG. 12

FIG. 13

FIG. 14A

10a$_1$

Battery cluster

10b$_1$

Direct current converter

40

20a1

Power conversion system

...

...

10a$_m$

Battery cluster

10b$_m$

Direct current converter

20an

Power conversion system

FIG. 14B

10a₁

Battery cluster

10b₁

Direct current converter

40

20a1

Power conversion system

...

...

10aₘ

Battery cluster

10bₘ

Direct current converter

20an

Power conversion system

FIG. 14C

10a₁

Battery cluster

10b₁

Direct current
converter

40

20a1

Power conversion
system

...

20an

Power conversion
system

10aₘ

Battery cluster

10bₘ

Direct current
converter

**FIG. 14D**

S1401

Control a first equalization circuit, to balance electricity
quantities of battery modules in a battery cluster

S1402

Separately allocate operating power to all power converters
and direct current converters

**FIG. 15A**

S1501

Determine whether an energy storage module is in a charging state or a discharging state

S1502

When the energy storage module is in the charging state, determine whether a battery cluster is in a charging cutoff state

Yes

S1503

Determine a largest value of first parameters of batteries included in each of all battery modules, and determine a to-be-equalized battery module when a deviation between largest values corresponding to the battery modules is greater than or equal to a first preset deviation value, where the to-be-equalized battery module includes a battery with a largest first parameter

S1504

Control a first equalization circuit corresponding to the to-be-equalized battery module, to bypass the to-be-equalized battery module

S1505

Determine whether a quantity of battery modules not bypassed in the battery cluster is less than a lower limit of a quantity

No

Yes

S1506

When the energy storage module is in the discharging state, determine whether a battery cluster is in a discharging cutoff state

Yes

S1507

Determine a smallest value of first parameters of batteries included in each of all battery modules, and determine a to-be-equalized battery module when a deviation between smallest values corresponding to the battery modules is greater than or equal to a second preset deviation value, where the to-be-equalized battery module includes a battery with a smallest first parameter

S1508

Control a first equalization circuit corresponding to the to-be-equalized battery module, to bypass the to-be-equalized battery module

S1509

Determine whether a quantity of battery modules not bypassed in the battery cluster is less than a lower limit of a quantity

No

Yes

Stop continuing to determine a to-be-equalized battery module

S1510

FIG. 15B

S1601

Obtain a first parameter corresponding to a new battery module, and control an original battery module to operate normally

S1602

Determine whether a first parameter corresponding to the original battery module is the same as the first parameter corresponding to the new battery module

No

Yes

S1603

Control a first equalization circuit of the new battery module, to connect the new battery module to a battery cluster

FIG. 16

S1701

When a sum of operating power is less than or equal to a smallest value of a sum of maximum allowed operating power of n power conversion systems and a sum of maximum allowed operating power of all direct current converters, determine, based on the sum of the operating power and maximum allowed operating power of each power conversion system, operating power to be allocated to an $i^{th}$ power conversion system, where i = 1, 2, ..., and n

S1702

When the sum of the operating power is greater than the smallest value, determine, based on the smallest value and the maximum allowed operating power of each power conversion system, operating power to be allocated to the $i^{th}$ power conversion system

FIG. 17A

S1801

During discharging of an energy storage system, when a sum of operating power is greater than a smallest value of a sum of maximum allowed operating power of n power conversion systems and a sum of maximum allowed operating power of all direct current converters, determine, based on the smallest value and each third parameter, operating power to be allocated to a $j^{th}$ direct current converter, where j = 1, 2, ..., and m

S1802

During charging of the energy storage system, when the sum of the operating power is greater than the smallest value of the sum of the maximum allowed operating power of the n power conversion systems and the sum of the maximum allowed operating power of all the direct current converters, determine, based on the smallest value and each third parameter, operating power to be allocated to the $j^{th}$ direct current converter

S1803

During charging of the energy storage system, when the sum of the operating power is less than or equal to the smallest value, determine, based on each third parameter and the sum of the operating power, operating power to be allocated to the $j^{th}$ direct current converter

FIG. 17B

S1901

Determine maximum allowed operating power of each direct current branch based on maximum allowed operating power corresponding to each of a direct current converter and a battery cluster in each direct current branch

S1902

When a sum of operating power is less than or equal to a smallest value of a sum of maximum allowed operating power of n power conversion systems and a sum of maximum allowed operating power of all direct current branches, determine, based on the sum of the operating power and maximum allowed operating power of each power conversion system, operating power to be allocated to an $i^{th}$ power conversion system, where i = 1, 2, ..., and n

S1903

When the sum of the operating power is greater than the smallest value, determine, based on the smallest value and the maximum allowed operating power of each power conversion system, operating power to be allocated to the $i^{th}$ power conversion system

FIG. 18A

S2001

Determine maximum allowed operating power of each direct current branch based on maximum allowed operating power corresponding to each of a direct current converter and a battery cluster in each direct current branch

S2002

During discharging of an energy storage system, when a sum of operating power is greater than a smallest value of a sum of maximum allowed operating power of n power conversion systems and a sum of maximum allowed operating power of all direct current branches, determine, based on the smallest value and each third parameter, operating power to be allocated to a $j^{th}$ direct current branch, where j = 1, 2, ..., and m

S2003

During charging of the energy storage system, when the sum of the operating power is greater than the smallest value of the sum of the maximum allowed operating power of the n power conversion systems and the sum of the maximum allowed operating power of all the direct current branches, determine, based on the smallest value and each third parameter, operating power to be allocated to the $j^{th}$ direct current branch

S2004

During charging of the energy storage system, when the sum of the operating power is less than or equal to the smallest value, determine, based on each third parameter and the sum of the operating power, operating power to be allocated to the $j^{th}$ direct current branch

FIG. 18B

S2201

Obtain a second parameter corresponding to each battery in a battery module, and obtain an average value of second parameters

S2202

Determine, as a to-be-equalized battery, a battery corresponding to a second parameter whose deviation from the average value is greater than a first preset deviation value, and control a second equalization circuit connected in parallel to the to-be-equalized battery to be turned on

FIG. 19

2000

2002

Photovoltaic module

...

Photovoltaic module

2001

Energy storage system

FIG. 20

## INTERNATIONAL SEARCH REPORT

| International application No. |
| --- |
| **PCT/CN2021/134301** |

### A. CLASSIFICATION OF SUBJECT MATTER

H02J 3/32(2006.01)i;  H02J 7/00(2006.01)i

According to International Patent Classification (IPC) or to both national classification and IPC

### B. FIELDS SEARCHED

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

CNABS, CNTXT, SIPOABS, DWPI, IEEE, CNKI: 均衡, 有源, 无源, 被动, 主动, 电阻, 开关, 晶体管, 储能, 电池, 簇, 组, 变换, 逆变, 功率, 光伏, balance, active, passive, resistor, switch, transistor, energy stroage, cell, cluster, battery, power, converter, inverter, photovoltaic

### C. DOCUMENTS CONSIDERED TO BE RELEVANT

| Category* | Citation of document, with indication, where appropriate, of the relevant passages | Relevant to claim No. |
| --- | --- | --- |
| Y | CN 107124004 A (CHINA HUANENG GROUP CLEANING ENERGY TECHNOLOGY RESEARCH INSTITUTE CO., LTD. et al.) 01 September 2017 (2017-09-01) description, paragraphs [0024]-[0030], and figure 1 | 1-64 |
| Y | CN 210327054 U (YANFENG VISTEON ELECTRONIC TECHNOLOGY (NANJING) CO., LTD.) 14 April 2020 (2020-04-14) description, paragraphs [0003]-[0028], and figures 1-2 | 1-64 |
| Y | CN 110120680 A (HEFEI SUNGROW NEW ENERGY TECHNOLOGY CO., LTD.) 13 August 2019 (2019-08-13) claim 1 | 3-9, 12-21, 45-58, 64 |
| Y | CN 102122826 A (POWER GRID TECHNOLOGY RESEARCH CENTER OF CHINA SOUTHERN POWER GRID CO., LTD. et al.) 13 July 2011 (2011-07-13) description, paragraphs [0020]-[0029], and figures 1-3 | 1-64 |
| A | JP 2018098820 A (PANASONIC IP MAN CORP.) 21 June 2018 (2018-06-21) entire document | 1-64 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **17 February 2022** | **25 February 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/134301**

| Patent document cited in search report | | | Publication date (day/month/year) | Patent family member(s) | | | Publication date (day/month/year) |
|---|---|---|---|---|---|---|---|
| CN | 107124004 | A | 01 September 2017 | None | | | |
| CN | 210327054 | U | 14 April 2020 | None | | | |
| CN | 110120680 | A | 13 August 2019 | CN | 110120680 | B | 13 July 2021 |
| CN | 102122826 | A | 13 July 2011 | None | | | |
| JP | 2018098820 | A | 21 June 2018 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2021080334 W